Europäisches Patentamt

European Patent Office

Office européen des brevets

(19)

(11) **EP 1 601 208 A2**

(12) **EUROPEAN PATENT APPLICATION**

(43) Date of publication:
**30.11.2005  Bulletin 2005/48**

(51) Int Cl.[7]: **H04N 7/34**

(21) Application number: **05253116.7**

(22) Date of filing: **19.05.2005**

| | |
|---|---|
| (84) Designated Contracting States: **AT BE BG CH CY CZ DE DK EE ES FI FR GB GR HU IE IS IT LI LT LU MC NL PL PT RO SE SI SK TR** Designated Extension States: **AL BA HR LV MK YU** | • **SAMSUNG ELECTRONICS CO., LTD. Suwon-city, Gyeonggi-do (KR)** |
| (30) Priority:  **25.05.2004  KR 2004037542** | (72) Inventor: **Park, Gwang-hoon Seongnam-si Gyeonggi-do (KR)** |
| (71) Applicants: • **Industry Academic Cooperation Foundation Kyunghee University Youngin-si, gyeonggi-do (KR)** | (74) Representative: **Robinson, Ian Michael et al Appleyard Lees, 15 Clare Road Halifax HX1 2HY (GB)** |

(54) **Method, apparatus and computer readable medium for prediction encoding/decoding**

(57)    A prediction encoder/decoder, a prediction encoding/decoding method, and a computer readable recording medium having a program for the prediction encoding/decoding method recorded thereon. The prediction encoder includes a prediction encoding unit (1, 2) that starts prediction at an origin macroblock of an area of interest of a video frame, continues prediction in an outward spiral in the shape of square rings composed of macroblocks surrounding the origin macroblock, and encodes video by performing intra-prediction using information about a macroblock that has just been coded in a square ring including a macroblock to be coded and a macroblock in a previous square ring and adjacent to the macroblock.

FIG. 15

EP 1 601 208 A2

**Description**

The present invention relates to a prediction encoder/decoder, a prediction encoding/decoding method, and a computer readable recording medium having recorded thereon a program for implementing the prediction encoding/ decoding method, for coding moving pictures.

New standards called Motion Picture Experts Group (MPEG)-4 part 10 AVC (advanced video coding) or International Telecommunication Union Telecommunication Standardization Sector (ITU-T) H.264 emerged in 2003 in the field of video compression. Fueling the emergence was a change from conventional circuit switching to packet switching and a need for coexistence of various communication infrastructures, along with the rapid spread of new communication channels such as mobile networks.

In AVC/H.264, spatial estimation encoding methods such as MPEG-1, MPEG-2, and MPEG-4 part 2 visual that differ from conventional international standards for moving picture encoding are used. In conventional moving picture encoding, coefficients transformed in a discrete cosine transform (DCT) domain are intra-predicted to improve encoding efficiency, resulting in degradation of subjective quality at low-pass band transmission bit rates. On the other hand, in AVC/H.264, spatial intra-prediction is performed in a spatial domain instead of in a transform domain.

Conventional spatial intra-prediction encoding is performed in such a way that information about a block to be encoded is predicted using information about a block that has already been encoded and reproduced and only difference information indicating a difference between information about an actual block to be encoded and the predicted block is encoded and transmitted to a decoder. At this time, a parameter required for prediction may be transmitted to the decoder or prediction may be performed by synchronizing the encoder and the decoder. Information about a block to be decoded is predicted using information about an adjacent block that has already been decoded and reproduced, a sum of the predicted information and the difference information transmitted from the encoder is calculated, and desired structure information is reproduced. At this time, if a parameter required for prediction is received from the encoder, it is also decoded for use.

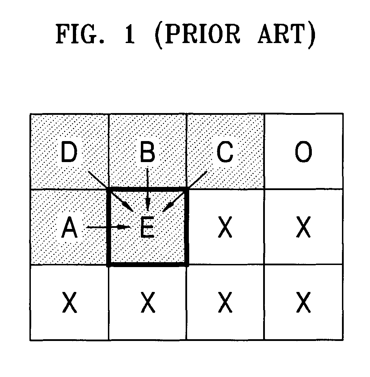

Intra-prediction used in conventional block-based or macroblock-based video encoding uses information about blocks A, B, C, and D that are adjacent to a block E to be coded in a traditional raster scan direction, as shown in Figure 1. Information about blocks marked with X in Figure 1 is to be processed after completion of encoding of the block E, and is therefore not available for encoding processing. A block marked with O can be used when a predicted value is calculated, but it is spatially far from the block E. As a result, the block marked with O does not have a high correlation with the block E and is hardly used.

As such, most conventional intra-prediction uses part of the information about the blocks D, B, and C that are adjacent to the block E to be coded among blocks in a line immediately above a line including the block E and information about the block A that has been encoded just before encoding the block E. In the case of MPEG-4-part 2, a DC (Discrete Coefficient) value of the block E is predicted using differences between DC values of the blocks A, D, and B in an 8X8 DCT domain. Also, in the case of AVC/H.264, a frame is divided into 4x4 blocks or 16x16 macroblocks and pixel values in a spatial domain, instead of in a DCT domain, are predicted.

Hereinafter, 16x16 spatial intra-prediction of AVC/H.264 will be briefly described.

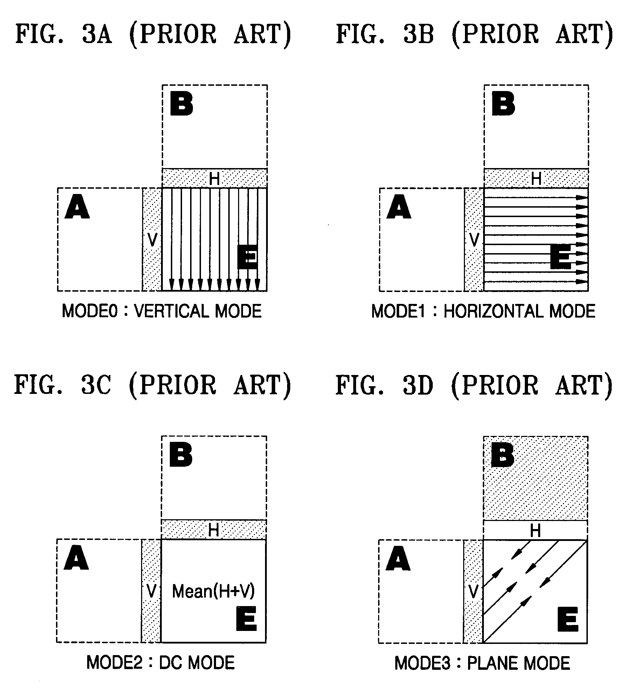

Figures 3A-3D show four modes of conventional 16x16 spatial intra-prediction.

Macroblocks to be coded are indicated by E in Figures 3A-3D. Spatial intra-prediction is carried out using macroblocks A and B that are adjacent to the macroblock E. In Figures 3A-3D, a group of pixels used for spatial intra-prediction includes 16 pixels that are located in the right-most line of the macroblock A, which are indicated by V, and 16 pixels that are located in the bottom-most line of the macroblock B, which are indicated by H. 16x16 spatial intra-prediction is performed using the four modes, each of which will now be described.

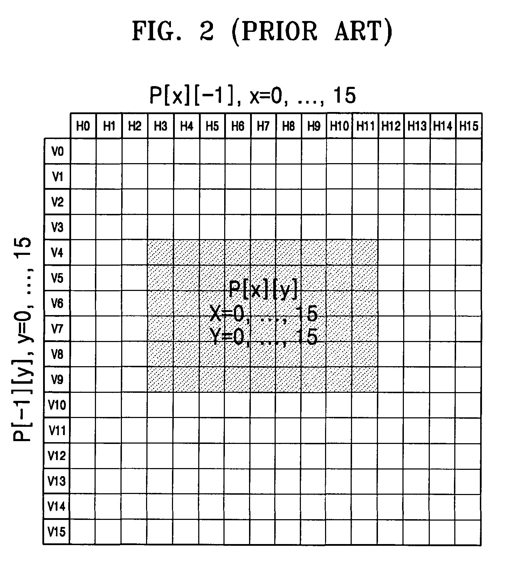

A pixel value used in each mode is defined as shown in Figure 2.

Assuming that a pixel value of the macroblock E to be intra-predicted is $P[x][y]$ (x = 0... 15 and y = 0...15), the line H of the macroblock B can be expressed as $P[x][-1]$ (x = 0 ... 15) and the line V of the macroblock A can be expressed as $P[-1][y]$ (y = 0... 15).

In Figure 3A, a mode 0 (vertical mode) is illustrated.

Referring to Figure 3A, by using the 16 pixels in the line H of the macroblock B, spatial intra-prediction is performed by setting the values of all the pixels of a column in the macroblock E equal to the values of the pixels in the line H directly above the column.

That is, in mode 0, when $P'[x][y]$ is defined as an intra-predicted value of the actual pixel value $P[x][y]$ and all 16 pixels ($P[x][-1]$, x=0...15) of the line H of the macroblock B exist, extrapolation is performed on a pixel-by-pixel basis using

$$P'[x][y] = P[x][-1], x = 0...15, y = 0... 15$$

In Figure 3B, a mode 1 (horizontal mode) is illustrated.

Referring to Figure 3B, by using the 16 pixels in the line V of the macroblock A, spatial intra-prediction is performed by setting the values of all the pixels of a column in the macroblock E equal to the values of the pixels in the line V directly to the left of the column.

Namely, in mode 1, when P'[x][y] is defined as the intra-predicted value of the actual pixel value P[x][y] and all 16 pixels of the line V (P[-1][y], y = 0... 15) of the macroblock A exist, extrapolation is performed on a pixel-by-pixel basis using

$$P'[x][y] = P[-1][y], x= 0...15, y = 0...15$$

In Figure 3C, a mode 2 (DC mode) is illustrated.

Referring to Figure 3C, values defined by mean values (Sumx=0..15P[x][-1]+Sumy=0..15P[-1][y]+16)/32) are mapped to all of the pixel values of the macroblock E. The mean values are defined as follows.

When all the 16 pixels of the line V and all the 16 pixels of the line H exist,

$$P'[x][y] = (Sumx=0..15P[x][-1]+Sumy=0..15P[-1][y]+16) >> 5, x= 0...15, y = 0...15$$

When only all the 16 pixels of the line V of the macroblock A exist,

$$P'[x][y] = (Sumx=0..15P[x][-1]+8) >> 4, x= 0...15, y = 0...15$$

When only all the 16 pixels of the line H of the macroblock B exist,

$$P[x][y] = (Sumy=0..15P[-1][y]+8) >> 4, x= 0...15, y = 0...15$$

Also, when neither all 16 pixels of the line V of the macroblock A nor all 16 pixels of the line H of the macroblock B exist,

$$P'[x][y] = 128, x=0...15, y=0...15$$

In Figure 3D, a mode 3 (plane Mode) is illustrated.

Referring to Figure 3D, mode 3 only operates when both all 16 pixels of the line V of the macroblock A exist and all 16 pixels of the line H of the macroblock B exist and mapping is performed using the following Equation.

$$P'[x][y] = Clip1( (a+b.(x-7)+c.(y-7)+16) >> 5$$

$$a= 16.(P[-1][15] + P[15][-1]); b= (5*H+32) >> 6 ; c= (5*V+32) >> 6$$

$$H = Sumx=1...8 (x. (P[7+x][-1] - P[-1][7-y]) )$$

$$V = Sumy=1...8 (y. (P[-1][7+y] - P[-1][7-y]) )$$

Mode 3 is appropriate for prediction of pixel values of an image that slowly changes.

As such, conventionally, there is a total of four modes in 16x16 macroblock spatial intra-prediction. Thus, encoding and decoding are performed using 2-bit fixed length encoding (FLC) or variable length encoding (VLC) according to probability distribution.

After predicted pixel values of a block to be coded is obtained in each of the four modes, the predicted pixel values that are most similar to the actual pixel values of the block to be coded is transmitted to the decoder. At this time, to obtain a group (block) of the pixel values that are most similar to the actual pixel values, a sum of absolute differences (SAD) is calculated and a mode having the minimum SAD is selected. When P[x][y] is the actual pixel value of an image and P'[x][y] is the predicted pixel value determined in each mode, the SAD is given by

$$SADMode= Sum_{x=0...15,y=0...15}|P[x][y] - P'[x][y]|$$

Once the selected intra-prediction mode is received and decoding is completed in the intra-prediction mode, the decoder creates predicted values of a corresponding macroblock on a pixel-by-pixel basis in the same way as the encoder in the same intra-prediction mode.

AVC/H.264 video encoding is designed to have high network friendliness, which is an important requirement for video encoding-related international standardization. To this end, AVC/H.264 employs slice-based independent encoding as one of its major functions. This is because data that undergoes compression encoding becomes very sensitive to transmission errors, which results in a very high probability that a part of a bit stream will be lost and such a loss has a great influence on not only a portion of the bit stream having the loss but also restoration of an image that refers to the corresponding image, resulting in a failure to obtain flawless restoration. In particular, when using packet-based transmission, which is widely used for Internet or mobile communications, if a packet error occurs during transmission, data following the damaged packet cannot be used for restoration of an image frame. Moreover, if a packet having header information is damaged, the entire data of the image frame cannot be restored, resulting in significant degradation of image quality. To solve such a problem, AVC/H.264 determines a slice that is smaller than a frame unit to be the smallest unit of data that can be independently decoded. More specifically, the slices are determined such that each slice can be perfectly decoded regardless of data corresponding to other slices that precede or follow the slice. Therefore, even when data of several slices is damaged, there is a high probability of restoration or concealment of a damaged portion of an image using image data of slices that are decoded without an error, which can minimize degradation of image quality.

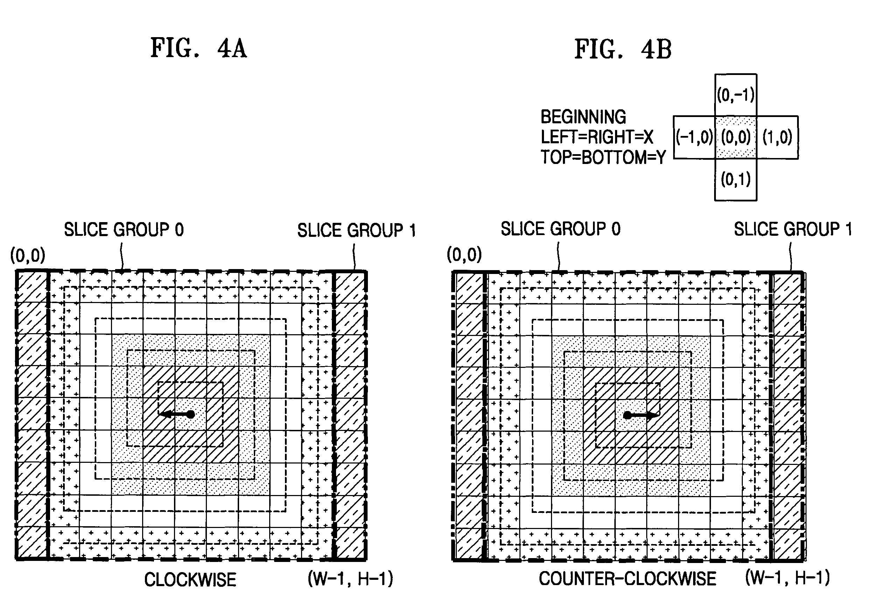

AVC/H.264 is designed to support not only a slice structure composed of groups of macroblocks in the raster scan direction, but also a new slice structure defined by flexible macroblock ordering (FMO). The new slice structure is adopted as an essential algorithm for a baseline profile and an extended profile. In particular, FMO mode 3 box-out scanning has modes in which scanning is performed in the clockwise direction and in the counterclockwise direction, as shown in Figure 4.

Scanning, such as box-out scanning, employed in AVC/H.264 is very useful for encoding a region of interest (ROI). Such scanning, as shown in Figure 4, begins in the center of an ROI or the center of an image and then continues outward and around the already scanned pixels, blocks, or macroblocks in the shape of square rings. In other words, scanning begins in a start region and continues such that a square ring is layered onto another square ring that is processed before the current square ring. When using ROI-oriented scanning, conventional intra-prediction designed for raster scanning cannot be used.

AVC/H.264 carefully considers error resiliency and network friendliness to keep up with the rapidly changing wireless environment and Internet environment. In particular, box-out scanning is designed for ROI encoding. The box-out scanning makes it possible to improve compression efficiency based on human visual characteristics or to perform improved error protection and most preferentially perform ROI processing.

However, since conventional video encoding such as AVC/H.264 employs intra-prediction encoding based on traditional raster scanning which is very different from ROI-oriented scanning, it cannot be used when a technique for improving encoding efficiency is applied to video encoding that is based on ROI-oriented scanning.

According to the present invention there is provided an apparatus and method as set forth in the appended claims. Preferred features of the invention will be apparent from the dependent claims, and the description which follows.

The present invention provides a prediction encoder/decoder, a prediction encoding/decoding method, and a computer-readable recording medium having recorded thereon a program for implementing the prediction encoding/decoding method, which are used for encoding/decoding an ROI.

According to one aspect of the present invention, there is provided a prediction encoder comprising a prediction encoding unit. The prediction encoding unit starts prediction at an origin macroblock of an area of interest of a video frame, continues prediction in an outward spiral in the shape of square rings composed of macroblocks surrounding the origin macroblock, and encodes video by performing intra-prediction using information about a macroblock that has just been coded in a square ring including a macroblock to be coded and a macroblock in a previous square ring and adjacent to the macroblock.

In an exemplary embodiment, the prediction encoder comprises an intra-prediction mode selection unit and an intra-prediction unit. The intra-prediction mode selection unit selects a prediction mode that is most suitable for the macroblock to be coded using the information about the macroblock that has just been coded in the square ring including the macroblock to be coded and the macroblock in the previous square ring and adjacent to the macroblock to be coded. The intra-prediction unit generates a predicted macroblock for the macroblock to be coded using the selected prediction mode.

In an exemplary embodiment, the intra-prediction mode selection unit comprises a reference macroblock search unit, a reference macroblock location determining unit, and an intra-prediction mode determining unit. The reference macroblock search unit searches for a reference macroblock included in the square ring including the macroblock to be coded and a reference macroblock that is included in the previous square ring and adjacent to the macroblock to be coded. The reference macroblock location determining unit determines the origin macroblock to be A if only the origin macroblock exists, determines a macroblock included in the same square ring to be A and a macroblock included in the previous square ring to be D if such macroblocks exist, and determines a macroblock that is included in the same square ring and has just been coded to be A, a macroblock that is in the previous square ring and adjacent to the macroblock to be coded to be B, and a macroblock that is adjacent to the macroblocks A and B and is included in the previous square ring to be D, if a macroblock coded just before the macroblock to be coded is included in the square ring and at least two macroblocks are included in the previous square ring. The intra-prediction mode determining unit calculates SADs between the predicted macroblocks obtained using the prediction modes and the determined macroblocks A, B, and D and determines an intra-prediction mode having the smallest SAD to be an intra-prediction mode.

In an exemplary embodiment, if only the macroblock A exists as a reference macroblock or only the macroblocks A and D exist as reference macroblocks, the intra-prediction mode determining unit determines whichever of mode 0 and mode 1 has the smallest SAD to be an intra-prediction mode in mode 0, pixel values of a bottom-most line of the macroblock A that is adjacent to the macroblock to be coded are extrapolated and then mapped to pixel values of the macroblock to be coded using only using information about the macroblock A, and, in mode 1, a mean of pixel values of the bottom-most line of the macroblock A that is adjacent to the macroblock to be coded is mapped to the pixel values of the macroblock to be coded using only the information about the macroblock A.

In an exemplary embodiment, if the macroblocks A, B, and D exist as reference macroblocks, the intra-prediction mode determining unit determines whichever of mode 2, mode 3, mode 4, and mode 5 having the smallest SAD to be an intra-prediction mode.

In mode 2, a mean of pixel values of the bottom-most line of the macroblock A that is adjacent to the macroblock to be coded and the bottom-most line of the macroblock B is mapped to pixel values of the macroblock to be coded.

In mode 3, similarity among the macroblocks A, B, and D is measured and, if the macroblocks A and D are similar to each other, a mean of pixel values of the bottom-most line of the macroblock B that is adjacent to the macroblock to be coded is mapped to the pixel values of the macroblock to be coded or, if the macroblocks B and D are similar to each other, a mean of pixel values of the bottom-most line of the macroblock A that is adjacent to the macroblock to be coded is mapped to the pixel values of the macroblock to be coded.

In mode 4, similarity among the macroblocks A, B, and D is measured and, if the macroblocks A and D are similar to each other, pixel values of the bottom-most line of the macroblock B that is adjacent to the macroblock to be coded are extrapolated and then mapped to the pixel values of the macroblock to be coded or, if the macroblocks B and D are similar to each other, pixel values of the bottom-most line of the macroblock A that is adjacent to the macroblock to be coded are extrapolated and then mapped to the pixel values of the macroblock to be coded.

Mode 5 is used when video characteristics of the macroblock to be coded gradually change from the macroblock A to the macroblock B.

In an exemplary embodiment, the prediction encoder comprises a discrete cosine transform (DCT) unit, a quantization unit, a ripple scanning unit, and an entropy encoding unit. The DCT unit performs DCT on a difference between the intra-predicted macroblock and the macroblock to be coded. The quantization unit quantizes transformed DCT coefficients. The ripple scanning unit starts scanning from the origin macroblock of a frame composed of the quantized DCT coefficients and continues to scan macroblocks in an outward spiral in the shape of square rings. The entropy encoding unit entropy encodes ripple scanned data samples and intra-prediction mode information selected by the intra-prediction mode selection unit.

According to another aspect of the present invention, there is provided a prediction decoder comprising a prediction decoding unit. The prediction decoding unit starts prediction at an origin macroblock of an area of interest of a video frame, continues prediction in an outward spiral in the shape of square rings composed of macroblocks surrounding the origin macroblock, and decodes video by performing intra-prediction using information about a macroblock that has just been decoded in a square ring including a macroblock to be decoded and a macroblock in a previous square ring and adjacent to the macroblock to be decoded in a previous square ring.

In an exemplary embodiment, the prediction decoder comprises an intra-prediction mode selection unit and an intra-prediction unit. The intra-prediction mode selection unit selects an intra-prediction mode that is most suitable for the macroblock to be decoded using the information about the macroblock that has just been decoded in the square ring including the macroblock to be decoded and the macroblock in the previous square ring and adjacent to the macroblock to be decoded. The intra-prediction unit generates a predicted macroblock for the macroblock to be decoded using the selected prediction mode.

In an exemplary embodiment, the intra-prediction mode selection unit comprises a reference macroblock search unit, a reference macroblock location determining unit, and an intra-prediction mode determining unit. The reference macroblock search unit searches for a reference macroblock included in the square ring including the macroblock to be decoded and a reference macroblock that is included in the previous square ring and adjacent to the macroblock to be decoded. The reference macroblock location determining unit determines the origin macroblock to be A if only the origin macroblock exists, determines a macroblock included in the same square ring to be A and a macroblock included in the previous square ring to be D if such macroblocks exist, and determines a macroblock that is included in the same square ring and has just been decoded to be A, a macroblock that is in the previous square ring and adjacent to the macroblock to be decoded to be B, and a macroblock that is adjacent to the macroblocks A and B and is included in the previous square ring to be D, if a macroblock coded just before the macroblock to be coded is included in the square ring and at least two macroblocks are included in the previous square ring. The intra-prediction mode determining unit calculates SADs between the predicted macroblocks obtained using the prediction modes and the determined macroblocks A, B, and D and determines an intra-prediction mode having the smallest SAD to be an intra-prediction mode.

In an exemplary embodiment, if received intra-prediction mode information indicates mode 0, the intra-prediction unit extrapolates pixel values of a bottom-most line of the macroblock A that is adjacent to the macroblock to be decoded and maps the extrapolated pixel values to pixel values of the macroblock to be decoded using only information about the macroblock A.

In an exemplary embodiment, if received intra-prediction mode information indicates mode 1, the intra-prediction unit maps a mean of pixel values of the bottom-most line of the macroblock A that is adjacent to the macroblock to be decoded to the pixel values of the macroblock to be decoded using only the information about the macroblock A.

In an exemplary embodiment, if received intra-prediction mode information indicates mode 2, the intra-prediction unit maps a mean of pixel values of the bottom-most line of the macroblock A that is adjacent to the macroblock to be decoded and the bottom-most line of the macroblock B to pixel values of the macroblock to be decoded.

In an exemplary embodiment, if received intra-prediction mode information indicates mode 3, the intra-prediction unit measures similarity among the macroblocks A, B, and D; and if the macroblocks A and D are similar to each other, the intra-prediction unit maps a mean of pixel values of the bottom-most line of the macroblock B that is adjacent to the macroblock to be decoded to the pixel values of the macroblock to be decoded; or if the macroblocks B and D are similar to each other, the intra-prediction unit maps a mean of pixel values of the bottom-most line of the macroblock A that is adjacent to the macroblock to be decoded to the pixel values of the macroblock to be decoded.

In an exemplary embodiment, if received intra-prediction mode information indicates mode 4, the intra-prediction unit measures similarity among the macroblocks A, B, and D; and if the macroblocks A and D are similar to each other, the intra-prediction unit extrapolates pixel values of the bottom-most line of the macroblock B that is adjacent to the macroblock to be decoded and then maps the extrapolated pixel values to the pixel values of the macroblock to be decoded; or if the macroblocks B and D are similar to each other, the intra-prediction unit extrapolates pixel values of the bottom-most line of the macroblock A that is adjacent to the macroblock to be decoded and maps the extrapolated pixel values to the pixel values of the macroblock to be decoded.

In an exemplary embodiment, if received intra-prediction mode information indicates mode 5, the intra-prediction unit performs prediction used when video characteristics of the macroblock to be coded gradually change from the macroblock A to the macroblock B.

In an exemplary embodiment, the prediction decoder comprises an entropy decoding unit, a ripple scanning unit, an inverse quantization unit, an inverse discrete cosine transform (DCT) unit, and an adder. The entropy decoding unit entropy decodes bitstreams received from a prediction encoder and extracts intra-prediction mode information from the entropy decoded bitstreams. The ripple scanning unit starts scanning from the origin macroblock of a frame composed of entropy decoded data samples and continues to scan macroblocks in an outward spiral in the shape of square rings. The inverse quantization unit inversely quantizes the ripple scanned data samples. The inverse DCT unit performs inverse DCT on the inversely quantized data samples. The adder adds a macroblock composed of inversely quantized DCT coefficients and the intra-predicted macroblock.

According to yet another aspect of the present invention, there is provided a prediction encoding method. The prediction encoding method comprises starting prediction at an origin macroblock of an area of interest of a video frame, continuing prediction in an outward spiral in the shape of square rings composed of macroblocks surrounding the origin macroblock, and encoding video by performing intra-prediction using information about a macroblock that has just been coded in a square ring including a macroblock to be coded and a macroblock in a previous square ring and adjacent to the macroblock to be coded in a previous square ring.

According to yet another aspect of the present invention, there is provided a prediction decoding method. The prediction decoding method comprises starting prediction at an origin macroblock of an area of interest of a video frame, continuing prediction in an outward spiral in the shape of square rings composed of macroblocks surrounding the origin macroblock, and decoding video by performing intra-prediction using information about a macroblock that has just been decoded in a square ring including a macroblock to be decoded and a macroblock in a previous square ring and adjacent to the macroblock to be decoded.

According to yet another aspect of the present invention, there is provided a computer readable recording medium having a program for implementing a prediction encoding method recorded thereon, the prediction encoding method comprising starting prediction at an origin macroblock of an area of interest of a video frame, continuing prediction in an outward spiral in the shape of square rings composed of macroblocks surrounding the origin macroblock, and encoding video by performing intra-prediction using information about a macroblock that has just been coded in a square ring including a macroblock to be coded and a macroblock in a previous square ring and adjacent to the macroblock to be coded in a previous square ring.

According to yet another aspect of the present invention, there is provided a computer readable recording medium having a program for implementing a prediction decoding method recorded thereon, the prediction decoding method comprising starting prediction at an origin macroblock of an area of interest of a video frame, continuing prediction in an outward spiral in the shape of square rings composed of macroblocks surrounding the origin macroblock, and decoding video by performing intra-prediction using information about a macroblock that has just been decoded in a square ring including a macroblock to be decoded and a macroblock in a previous square ring and adjacent to the macroblock to be decoded.

The above and other features and advantages of the present invention will become more apparent by describing in detail exemplary embodiments thereof with reference to the attached drawings in which:

Figure 1 shows reference blocks required for intra-prediction encoding in the raster scan direction according to prior art;

Figure 2 is a view for explaining a method of determining pixel values in spatial prediction according to prior art;

Figures 3A-3D illustrate four modes of 16x16 spatial intra-prediction according to prior art;

Figures 4A and 4B are views for explaining FMO mode 3 box-out scanning according to prior art;

Figure 5 is a view for explaining locations of macroblocks in a current square ring when performing intra-prediction encoding, first on the center of a square and continuing outward in square rings;

Figures 6A-6D illustrate spatial intra-prediction mode 0 according to an embodiment of the present invention, which can be used when the number of reference macroblocks is 1 or 2;

Figures 7A-7D illustrate spatial intra-prediction mode 1 according to an embodiment of the present invention, which can be used when the number of reference macroblocks is 1 or 2;

Figures 8A and 8B are views for explaining definition of a line of reference pixels in reference macroblocks when the number of reference macroblocks is 3;

Figures 9A-9H are views for explaining possible locations of reference macroblocks in ROI scanning when the number of reference macroblocks is more than 3;

Figure 10 is a view for explaining grounds for the use of intra-prediction when the number of reference macroblocks shown in Figures 9A through 9F is more than 3;

Figure 11 illustrates intra-prediction mode 2 when a macroblock A is located on the left side of a macroblock E and a macroblock B is located above the macroblock E, according to an embodiment of the present invention;

Figures 12A and 12B illustrate intra-prediction mode 3 when the macroblock A is located on the left side of the macroblock E and the macroblock B is located above the macroblock E, according to an embodiment of the present invention;

Figures 13A and 13B show intra-prediction mode 4 when the macroblock A is located on the left side of the macroblock E and the macroblock B is located above the macroblock E, according to an embodiment of the present invention;

Figure 14 shows intra-prediction mode 5 when the macroblock A is located on the left side of the macroblock E and the macroblock B is located above the macroblock E, according to an embodiment of the present invention;

Figure 15 is a schematic block diagram of an intra-prediction encoder according to an embodiment of the present invention;

Figure 16 is a schematic block diagram of an intra-prediction decoder according to an embodiment of the present invention;

Figure 17 is a detailed block diagram of an intra-prediction mode selection unit shown in Figures 15 and 16;

Figure 18 is a flowchart illustrating an intra-prediction encoding method according to an embodiment of the present invention;

Figure 19 is a detailed flowchart illustrating an intra-prediction procedure shown in Figure 18;

Figure 20 is a flowchart illustrating an intra-prediction decoding method according to an embodiment of the present invention; and

Figures 21A and 21B are detailed flowcharts illustrating an intra-prediction procedure shown in Figure 20.

Hereinafter, a macroblock-based intra-prediction method and apparatus according to embodiments of the present invention that are appropriate for ROI-oriented scanning will be described.

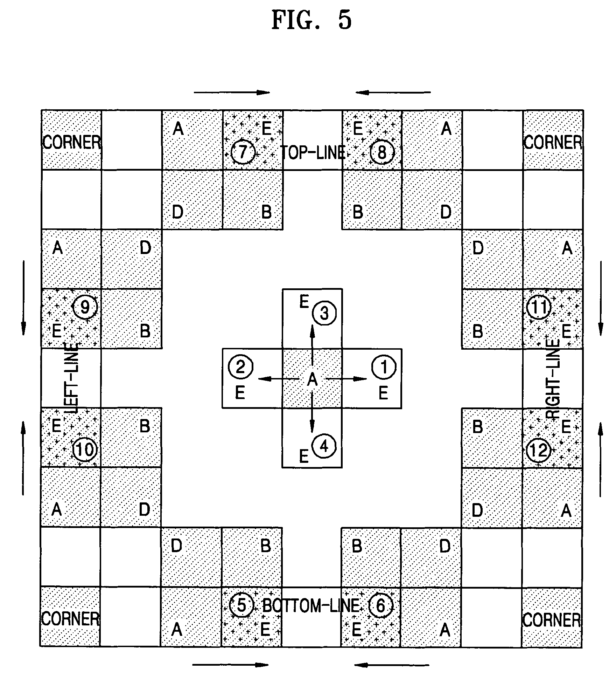

Figure 5 is a view for explaining locations of macroblocks in a present square ring when performing intra-prediction encoding, first on the center of a square and continuing outward in square rings.

To adaptively perform intra-prediction encoding in block or macroblock units by first scanning on the macroblock of center and continuing outward in square rings, the locations of reference blocks or reference macroblocks required for prediction depend on the line of the square ring, i.e., a top line, a bottom line, a left line, or a right line, and intra-prediction encoding is divided into two methods according to the direction of scanning.

According to ROI-oriented scanning, in which square rings are layered from the inside to the outside, there is no possibility that a reference macroblock is located outside a slice, a video object plane (VOP), or a frame to be coded. Therefore, the following cases can occur: ⓐ there exists only one macroblock that can be referred to; ⓑ there exist only two macroblocks that can be referred to, one in an adjacent square ring that is closer to the center than the macroblock that is to be coded and a macroblock that has just been coded and exists within the same present square ring as the macroblock that is being coded; and © there exist at least three macroblocks that can be referred to, one that has just been coded in the direction of scanning and is within the same present square ring as the macroblock that is being coded and at least two in an adjacent square ring that is closer to the center than the square ring having the macroblock that is being coded.

Referring to Figure 5, macroblocks marked with ①, ②, ③, and ④ correspond to the cases ⓐ and ⓑ, and macroblocks marked with ⑤, ⑥, ⑦, ⑧, ⑨, ⑩, ⑪, and ⑫ correspond to the case ©.

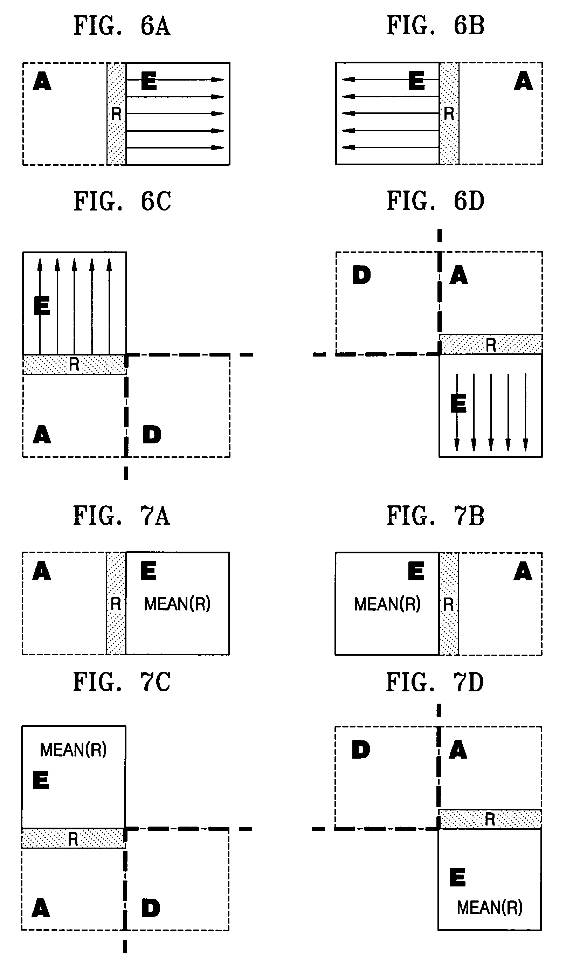

In the case of ⓐ, in ROI-oriented scanning, after encoding or decoding the origin macroblock located at the initial origin (which may be located in the center of an image frame), a first block or macroblock is coded or decoded. In the case of ⓑ, i.e., when there exist only two macroblocks that can be referred to, one in an adjacent square ring that is closer to the origin macroblock than the macroblock to be coded and a macroblock that has just been coded and exists within the same present square ring as the macroblock that is being coded, the macroblock that has just been coded in the same square ring is located closer to the origin macroblock than the current macroblock at all times due to the direction of scanning. As a result, corresponding information is not reliable. Thus, only information about the macroblock that is located within the same present square ring having the macroblock to be coded and has just been coded in the direction of scanning is reliable and can be used for intra-prediction. Therefore, macroblock-based spatial intra-prediction in the cases ⓐ and ⓑ can be performed using the same mode, i.e., one of two modes illustrated in Figures 6 and 7.

Figure 6 illustrates spatial intra-prediction mode 0 according to an embodiment of the present invention, which can be used when the number of reference macroblocks is 1 or 2.

In Figures 6A through 6D, a macroblock to be intra-prediction coded is defined as a macroblock E and a macroblock that has just been coded before the macroblock E and can be referred to or an origin macroblock, which is the first to be coded in an image frame, is defined as a macroblock A. In the macroblock A, a line of 16 pixels that are immediately adjacent to the macroblock E is defined as a line R. The locations of the pixels of the line R are defined according to the relative locations of the macroblocks E and A, as follows. The pixel values of the macroblock E are defined as P[x][y] (x=0, ..., 15, y=0, ..., 15) and P'[x][y] are defined as an intra-predicted value.

(1) When the macroblock A is located on the left side of the macroblock E,
the pixel values of the line R are defined as P[-1][y] (y=0, ...15)

(2) When the macroblock A is located on the right side of the macroblock E,
the pixel values of the line R are defined as P[16][y] (y=0, ...15)

(3) When the macroblock A is located above the macroblock E,
the pixel values of the line R are defined as P[x][-1] (x=0, ...15)

(4) When the macroblock A is located below the macroblock E,
the pixel values of the line R are defined as P[x][16] (x=0, ...15)

For mode 0 and mode 1, mode information can be expressed using 1 bit. The 1 bit of mode information can be transmitted to a decoder and processed in an intra-prediction mode or other modes that will be described later.
In mode 0, extrapolation is performed by mapping information regarding the pixels of the line R of the macroblock A to intra-predicted values of the macroblock E.
As illustrated by Figure 6A, when the macroblock E is located on the right side of the macroblock A, the intra-predicted value of the macroblock E is defined as:

$$P'[x][y]=P[-1][y] \ (x=0, ...15, y=0, ...15)$$

As illustrated by Figure 6B, when the macroblock E is located on the left side of the macroblock A, the intra-predicted value of the macroblock E is defined as:

$$P'[x][y]=P[16][y] \ (x=0, ...15, y=0, ...15)$$

As illustrated by Figure 6C, when the macroblock E is located above the macroblock A, the intra-predicted value of the macroblock E is defined as:

$$P'[x][y]=P[x][16] \ (x=0, ...15, y=0, ...15)$$

As illustrated by Figure 6D, when the macroblock E is located below the macroblock A, the intra-predicted value of the macroblock E is defined as:

$$P'[x][y]=P[x][-1] \ (x=0, ...15, y=0, ...15)$$

Figure 7 illustrates spatial intra-prediction mode 1 (column mean mode) according to an embodiment of the present invention, which can be used when the number of reference macroblocks is 1 or 2.
In mode 1, the intra-predicted value of the macroblock E is a mean of pixel values of the line R of the macroblock A.
As illustrated by Figure 7A, when the macroblock E is located on the right side of the macroblock A, the intra-predicted value of the macroblock E is defined as:

$$P'[x][y]=(Sumx=0"..,15P[-1][y] + 8) >> 4 \ (x=0, ...15, \ y=0, ...15)$$

As illustrated by Figure 7B, when the macroblock E is located on the left side of the macroblock A, the intra-predicted value of the macroblock E is defined as:

$$P'[x][y]=(Sumx=0,...,15P[16][y] + 8) >> 4 \ (x=0, ...15, \ y=0, ...15)$$

As illustrated by Figure 7C, when the macroblock E is located above the macroblock A, the intra-predicted value of the macroblock E is defined as:

$$P'[x][y]=(Sumx=0, ..., 15P[x][16] + 8) >> 4 (x=0, ...15, y=0, ...15)$$

As illustrated by Figure 7D, when the macroblock E is located below the macroblock A, the intra-predicted value of the macroblock E is defined as:

$$P'[x][y]=(Sumx=0, ..., 15P[x][-1] + 8) >> 4 (x=0, ...15, y=0, ...15)$$

After the predicted pixel values of the macroblock E are obtained using both mode 0 and model, an SAD (=Sumx=0, ...,15, y=0, ..., 15|*P*[*x*][*y*]-*P'*[*x*][*y*]|) between actual pixel values and the predicted values is calculated, a mode having the minimum SAD is selected, and information about the selected mode is transmitted to the decoder. To distinguish mode 0 and mode 1, a minimum of 1 bit must be transmitted. Once the selected intra-prediction mode is transmitted and decoding is completed, predicted pixel values of the macroblock E are generated in a manner similar to that of the encoder. Details will be described later.

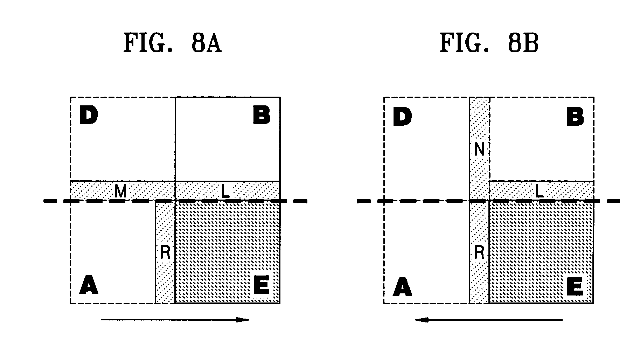

Figures 8A and 8B are views for explaining definition of lines of reference pixels in reference macroblocks when the number of reference macroblocks is 3.

As described above, in case ⓒ , there exist three macroblocks that can be referred to by a macroblock to be coded, which is defined as the macroblock E, the three macroblocks include a macroblock that has just been coded and exists within the same square ring as the macroblock E and at least two macroblocks in a square ring adjacent to the square ring having the macroblock E, closer to the origin macroblock and can be referred to for intra-prediction of the macroblock E in block units. In the case of ROI-oriented scanning, except in cases ⓐ and ⓑ , there are at least two adjacent macroblocks in a square ring that is adjacent to the square ring having the macroblock E and closer to the origin macroblock.

A macroblock that exists within the same square ring having the macroblock E and has coded just prior to the macroblock E is defined as a macroblock A.

A macroblock that is adjacent to the macroblock E and is present within a previous square ring that has just been coded is defined as a macroblock B.

A macroblock that is adjacent to the macroblock A and the macroblock B and is present within a previous square ring that has just been coded is defined as a macroblock D.

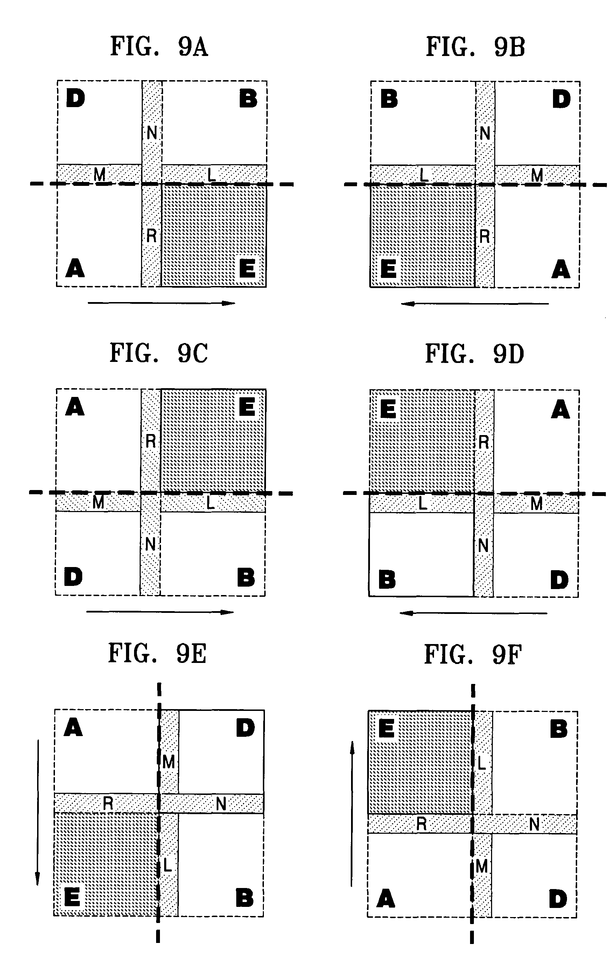

In ROI-oriented scanning, all the conditions that can result in the case ⓒ are a total of 8 and are shown in Figures 9A through 9F.

Figures 9A-9H are views for explaining possible locations of reference macroblocks in ROI-oriented scanning when the number of reference macroblocks is more than 3.

For the explanation of intra-prediction modes, sets of pixels to be referred to by the macroblocks A, B, and D are defined as follows.

Line R is a line of 16 pixels included in the macroblock A which are immediately adjacent to the macroblock E. Locations of pixels of the line R differ according to relative locations of the macroblock E and the macroblock A. If pixel values of the macroblock E are defined as P[x][y] (x=0, ..., 15, y=0, ..., 15), the pixel values of the line R are defined as follows.

When the macroblock A is located on the left side of the macroblock E, the pixel values of the line R are defined as P[-1][y], y=0, ..., 15

When the macroblock A is located on the right side of the macroblock E, the pixel values of the line R are defined as P[16][y], y=0, ..., 15

When the macroblock A is located above the macroblock E, the pixel values of the line R are defined as P[x][-1], x=0, ..., 15

When the macroblock A is located below the macroblock E, the pixel values of the line R are defined as P[x][16], y=0, ..., 15

Line L is a line of 16 pixels included in the macroblock B which are immediately adjacent to the macroblock E. Locations of pixels of the line L differ according to relative locations of the macroblock E and the macroblock B. If pixel values of the macroblock E are defined as P[x][y] (x=0, ..., 15, y=0, ..., 15), the pixel values of the line L are defined as follows.

When the macroblock B is located on the left side of the macroblock E, the pixel values of the line L are defined as P[-1][y], y=0, ..., 15

When the macroblock B is located on the right side of the macroblock E, the pixel values of the line L are defined as P[16][y], y=0, ..., 15

When the macroblock B is located above the macroblock E, the pixel values of the line L are defined as P[x][-1], x=0, ..., 15

When the macroblock B is located below the macroblock E, the pixel values of the line L are defined as P[x][16], y=0, ..., 15

Line M is a line of 16 pixels included in the macroblock D which are immediately adjacent to the macroblock E. Locations of pixels of the line L differ according to relative locations of the macroblock A, the macroblock B, and the macroblock E. If pixel values of the macroblock E are defined as P[x][y] (x=0, ..., 15, y=0, ..., 15), the pixel values of the line M are defined as follows.

Referring to Figure 9A, when the macroblock A is located on the left side of the macroblock E and the macroblock B is located above the macroblock E, the pixel values of the line M are defined as P[x-16][-1], x=0, ..., 15

Referring to Figure 9B, when the macroblock A is located on the right side of the macroblock E and the macroblock B is located above the macroblock E, the pixel values of the line M are defined as P[x+16][-1], x=0, ..., 15

Referring to Figure 9C, when the macroblock A is located on the left side of the macroblock E and the macroblock B is located below the macroblock E, the pixel values of the line M are defined as P[x-16][16], x=0, ..., 15

Referring to Figure 9D, when the macroblock A is located on the right side of the macroblock E and the macroblock B is below the macroblock E, the pixel values of the line M are defined as P[x+16][16], x=0, ..., 15

Referring to Figure 9E, when the macroblock A is located above the macroblock E and the macroblock B is located on the right side of the macroblock E, the pixel values of the line M are defined as P[16][y-16], y=0, ..., 15

Referring to Figure 9F, when the macroblock A is located below the macroblock E and the macroblock B is located on the right side of the macroblock E, the pixel values of the line M are defined as P[16][y+16], y=0, ..., 15

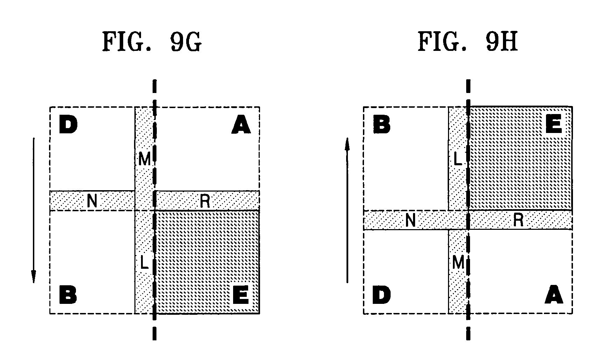

Referring to Figure 9G, when the macroblock A is located above the macroblock E and the macroblock B is located on the left side of the macroblock E, the pixel values of the line M are defined as P[-1][y-16], y=0, ..., 15

Referring to Figure 9H, when the macroblock A is located below the macroblock E and the macroblock B is located on the left side of the macroblock E, the pixel values of the line M are defined as P[-1][y+16], y=0, ..., 15

Line N is a line of 16 pixels included in the macroblock D which are immediately adjacent to the macroblock B. Locations of pixels of the line N differ according to relative locations of the macroblock A, the macroblock B, and the macroblock E. If pixel values of the macroblock E are defined as P[x][y] (x=0, ..., 15, y=0, ..., 15), the pixels values of the line M are defined as follows.

Referring to Figure 9A, when the macroblock A is located on the left side of the macroblock E and the macroblock B is located above the macroblock E, the pixel values of the line N are defined as P[-1][y-16], y=0, ..., 15

Referring to Figure 9B, when the macroblock A is located on the right side of the macroblock E and the macroblock B is located above the macroblock E, the pixel values of the line N are defined as P[16][y-16], y=0, ..., 15

Referring to Figure 9C, when the macroblock A is located to the left side of the macroblock E and the macroblock B is located below the macroblock E, the pixel values of the line N are defined as P[-1][y+16], y=0, ..., 15

Referring to Figure 9D, when the macroblock A is located on the right side of the macroblock E and the macroblock B is below the macroblock E, the pixel values of the line N are defined as P[16][y+16], y=0, ..., 15

Referring to Figure 9E, when the macroblock A is located above the macroblock E and the macroblock B is located on the right side of the macroblock E, the pixel values of the line N are defined as P[x+16][-1], x=0, ..., 15

Referring to Figure 9F, when the macroblock A is located below the macroblock E and the macroblock B is located on the right side of the macroblock E, the pixel values of the line N are defined as P[x+16][16], x=0, ..., 15

Referring to Figure 9G, when the macroblock A is located above the macroblock E and the macroblock B is located on the left side of the macroblock E, the pixel values of the line N are defined as P[x-16][-1], x=0, ..., 15

Referring to Figure 9H, when the macroblock A is located below the macroblock E and the macroblock B is located on the left side of the macroblock E, the pixel values of the line N are defined as P[x-16][16], x=0, ..., 15

In the case ©, four modes can be used for intra-prediction and a total of 6 functions can be expressed using the four modes.

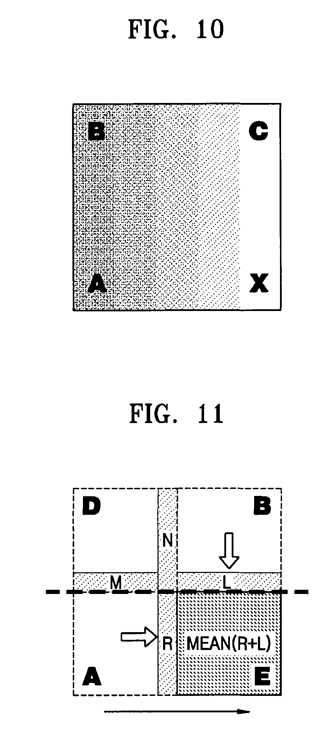

The four modes include a full mean mode, a selective mean mode, a selective extrapolation mode, and a plane mode. As an example, Figures 11 through 14 show a case where the macroblock A is located on the left side of the macroblock E and the macroblock B is located above the macroblock E.

Figure 11 illustrates intra-prediction mode 2, i.e., the full mean mode, when the macroblock A is located on the left side of the macroblock E and the macroblock B is located above the macroblock E, according to an embodiment of the present invention.

Referring to Figure 11, all the pixel values within the macroblock E are intra-predicted using the 16 pixels of the line R of the macroblock A and the 16 pixels of the line L of the macroblock B.

In Figure 11, since the line R is defined as P[-1][y] (y=0, ..., 15) and the line L is defined as P[x][-1] (x=0, ..., 15) ,

$$P'[x][y]= (Sum_{x=0, ..., 15}P[x][-1]+Sum_{y=0, ..., 15}P[-1][y]+16) >> 5 \ (x=0, ..., 15, y=0, ..., 15)$$

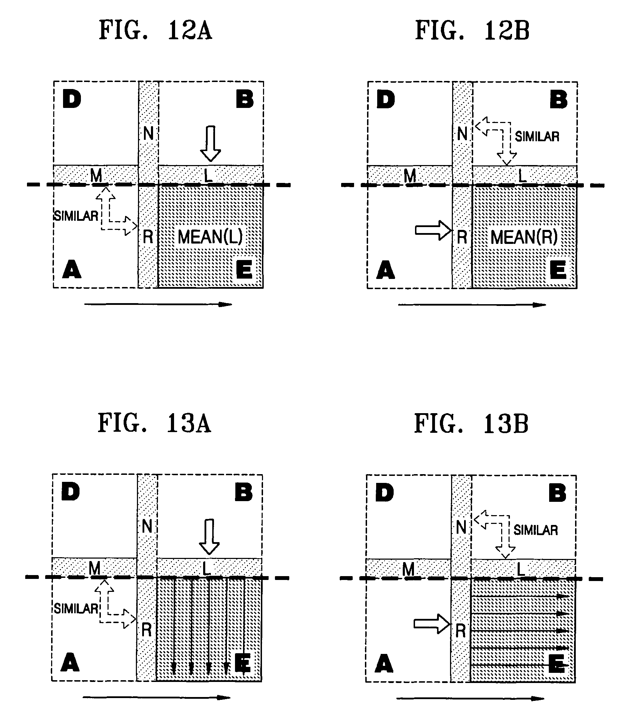

Figures 12A and 12B illustrate intra-prediction mode 3, i.e., the selective mean mode, when the macroblock A is located on the left side of the macroblock E and the macroblock B is located above the macroblock E, according to an embodiment of the present invention.

In intra-prediction mode 3, if two of three other macroblocks besides the macroblock E, i.e., the macroblocks A, B, and D, are similar to each other, the remaining macroblock is used for prediction of the macroblock E. In other words, if the video characteristics of the macroblock D are similar to those of the macroblock A, the video characteristics of the macroblock E are predicted using the video characteristics of the macroblock B. Also, if the video characteristics of the macroblock D are similar to those of the macroblock B, the video characteristics of the macroblock E are predicted using the video characteristics of the macroblock A. When the similarity of video characteristics is measured, the video characteristics of the line M of the macroblock D and the video characteristics of the line R of the macroblock A are compared, and the video characteristics of the line N of the macroblock D and the video characteristics of the line L of the macroblock B are compared.

As such, if the video characteristics of two of four macroblocks are similar to each other, a macroblock to be coded is predicted using the video characteristics of other remaining non-similar macroblocks because of the video characteristics as shown in Figure 10. In other words, as shown in Figure 10, depending on a video, if a macroblock A and a macroblock B are similar, there is a high probability that a macroblock X is similar to a macroblock C.

Referring to Figure 12A, since the video characteristics of the line M of the macroblock D are similar to those of the line R of the macroblock A, the video characteristics of the macroblock E are predicted using a mean of pixel values of the line L of the macroblock B.

Referring to Figure 12B, since the video characteristics of the line N of the macroblock D are similar to those of the line N of the macroblock B, the video characteristics of the macroblock E are predicted using a mean of pixel values of the line R of the macroblock A.

This can be expressed as

$$\text{If } |Mean(R)\text{-}Mean(M)| < |Mean(L)\text{-}Mean(N)|, \quad \text{then}$$

$$P'[x][y]=Mean(L) \ Else \ P'[x][y]=Mean(R)$$

In Figures 12A and 12B, since the pixel values of the line R are defined as P[-1][y] (y=0, ..., 15), the pixel values of the line L are defined as P[x][-1] (x=0, ..., 15), the pixel values of the line M are defined as P[x-16][-1] (x=0, ..., 15), and the pixel values of the line N are defined as P[-1][y-16] (y=0, ..., 15),

$$Mean(R)=Sum_{y=0, ..., 15} (P[-1][y]) >> 4$$

$$Mean(L)=Sum_{x=0, ..., 15} (P[x][-1]) >> 4$$

$$Mean(M)=Sum_{x=0, ..., 15} (P[x-16][-1]) >> 4$$

$$Mean(N)=Sum_{y=0, ..., 15} (P[-1][y-16]) >> 4$$

$$\text{If } (|Mean(R)\text{-}Mean(M)| < |Mean(L)\text{-}Mean(N)|), \text{ then}$$

$$P'[x][y]=Mean(L),$$

$$\text{for } x=0, ..., 15, y=0, ..., 15$$

$$\text{Else } P'[x][y]=Mean(R), \text{ for } x=0, ..., 15, y=0, ..., 15$$

Figures 13A and 13B illustrate intra-prediction mode 4, i.e., the selective extrapolation mode, when the macroblock A is located on the left side of the macroblock E and the macroblock B is located above the macroblock E, according to an embodiment of the present invention.

Intra-prediction mode 4 uses the same method as used in intra-prediction mode 3. However, in intra-prediction mode 4, predicted pixel values of the macroblock E are determined by performing extrapolation on pixel values of the line R of the macroblock A or pixel values of the line L of the macroblock B.

Referring to Figure 13A, since the video characteristics of the line M of the macroblock D are similar to those of the line R of the macroblock A, the video characteristics of the macroblock E are predicted using pixel values of the line L of the macroblock B.

Referring to Figure 13B, since the video characteristics of the line N of the macroblock D are similar to those of the line N of the macroblock B, the video characteristics of the macroblock E are predicted using pixel values of the line R of the macroblock A.

This can be expressed as

$$\text{If } |Mean(R)\text{-}Mean(M)| < |Mean(L)\text{-}Mean(N)|, \text{ then}$$

$$P'[x][y]=Pixel(L)$$

$$\text{Else } P'[x][y] =Pixel(R)$$

In Figure 13, since the pixel values of the line R are defined as P[-1][y] (y=0, ..., 15), the pixel values of the line L are defined as P[x][-1] (x=0, ..., 15), the pixel values of the line M are defined as P[x-16][-1] (x=0, ..., 15), and the pixel values of the line N are defined as P[-1][y-16] (y=0, ..., 15),

$$Mean(R)=Sumy=0, ..., 15 (P[-1][y]) >> 4$$

$$Mean(L)=Sumx=0, ..., 15 (P[x][-1]) >> 4$$

$$Mean(M)=Sumx=0, ..., 15 (P[x-16][-1]) >> 4$$

$$Mean(N)=Sumy=0, ..., 15 (P[-1][y-16]) >> 4$$

$$\text{If } (|Mean(R)\text{-}Mean(M)| < |Mean(L)\text{-}Mean(N)|), \text{ then}$$

$$P'[x][y]=P[x][-1],$$

$$\text{for } x=0, ..., 15, y=0, ..., 15$$

$$\text{Else } P'[x][y]=P[-1][y], \text{ for } x=0, ..., 15, y=0, ..., 15$$

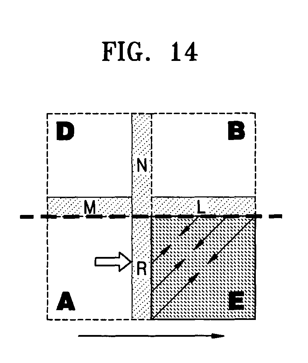

Figure 14 illustrates intra-prediction mode 5, i.e., the plane mode, when the macroblock A is located on the left side of the macroblock E and the macroblock B is located above the macroblock E, according to an embodiment of the present invention.

Intra-prediction mode 5 is useful when the video characteristics of the macroblock E gradually change from the macroblock A to the macroblock B. For example, an equation related to mapping required for pixel prediction illustrated in Figure 14 can be expressed as follows.

$$P'[x][y]=Clip1((a+b.(x-7)+c.(y-7)+16) >> 5$$

$$A=16.(P[-1][15]+P[15][-1]); b=(5*H+32) >> 6; c=(5*V+32) >> 6$$

$$H=Sumx=1, ..., 8(x.(P[7+x][-1]-P[-1][7-y]))$$

$$V=Sumy=1, ..., 8(y.(P[-1][7+y]-P[-1][7-y]))$$

A procedure for spatial intra-prediction applied to the case ⓒ is as follows.

After predicted values for the pixels of the macroblock E are obtained using mode 2, mode 3, mode 4, and mode 5, a SAD between actual pixel values and the predicted values is calculated, a mode generating the minimum SAD is selected, and information corresponding to the selected mode is transmitted to the decoder. To distinguish the four modes, the minimum bit required for transmission is 2 bits.

$$SADMode=Sumx=0, ..., 15, y=0, ..., 15|P[x][y]-P'[x][y]$$

After the selected intra-prediction mode is received and decoding is completed, predicted pixel values of the macroblock E are generated in a similar manner as in the encoder.

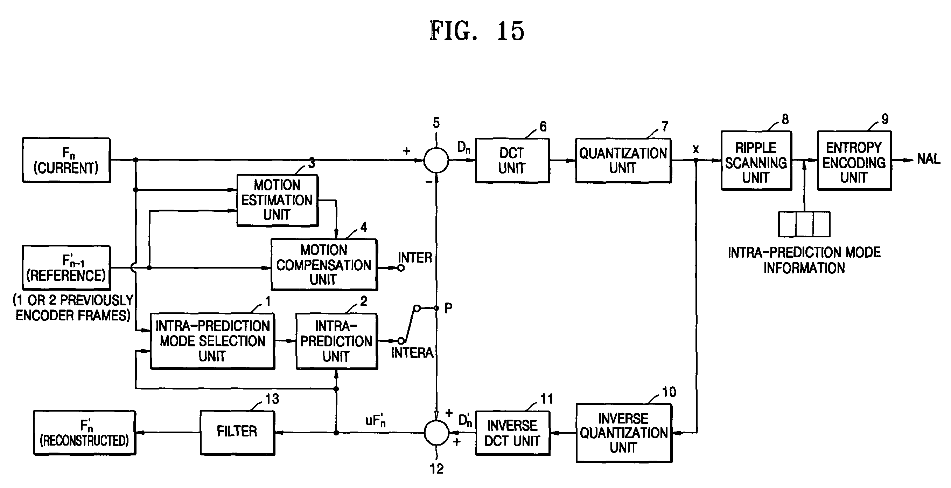

Figure 15 is a schematic block diagram of an intra-prediction encoder according to an embodiment of the present invention.

Referring to Figure 15, the intra-prediction encoder includes an intra-prediction mode selection unit 1, an intra-prediction unit 2, a motion estimation unit 3, a motion compensation unit 4, a subtraction unit 5, a DCT unit 6, a quantization unit 7, a ripple scanning unit 8, an entropy encoding unit 9, an inverse quantization unit 10, an inverse DCT unit 11, an adder 12, and a filter 13.

The intra-prediction encoder includes two data flow paths. One is a forward path starting with a current from $F_n$ and finishing with a calculation by the quantization unit 7 and the other is a reconstructed path starting at the quantization unit 7 and ending with a reconstructed frame $F'_n$.

First, the forward path will be described.

An input frame $F_n$ is provided for prediction encoding. A frame is processed in macroblock units, each corresponding to 16x16 pixels of the original image. Each macroblock is encoded in an intra or inter mode. In both the intra mode and inter mode, a predicted macroblock P is created based on a reconstructed frame. In the intra mode, the predicted macroblock P is created from samples (a reconstructed macroblock $uF'_n$) of a current frame $F_n$ that has previously been encoded, decoded, and then reconstructed. In other words, the intra-prediction mode selection unit 1 selects a mode that is most suitable for a macroblock to be encoded, based on the reconstructed macroblock $uF'_n$, and the intra-prediction unit 2 performs intra-prediction according to the selected prediction mode. In the inter mode, the predicted macroblock P is created through motion compensated prediction after motion estimation is performed by the motion estimation unit 3 based on at least one reference frame $F'_{n-1}$ and motion compensation is performed by the motion compensation unit 4. The reference frame $F'_{n-1}$ has been previously encoded. However, prediction of each macroblock can be performed using one or two prior frames that have been previously encoded and reconstructed.

The predicted macroblock P is subtracted from a current macroblock by the subtraction unit 5, and thus a difference macroblock Dn is created. The difference macroblock Dn is DCT transformed by the DCT unit 6 and is then quantized by the quantization unit 7, thereby generating quantized transform coefficients X. The quantized transform coefficients X are ripple scanned by the ripple scanning unit 8 and are then entropy encoded by the entropy encoding unit 9. The entropy encoded coefficients X along with additional information required for decoding of a macroblock are used to generate compressed bitstreams. The additional information includes intra-prediction mode information, quantization operation size information, and motion vector information. In particular, according to the present embodiment, the intra-prediction mode information contains information about the intra-prediction mode selected by the intra-prediction mode selection unit 1 and can be expressed with 3 bits to indicate 6 modes used in the present embodiment. These compressed bitstreams are transmitted to a network abstraction layer (NAL) for transmission or storage.

The reconstructed path will now be described.

The quantized transform coefficients X are decoded to reconstruct a frame used for encoding another macroblock. In other words, the quantized transform coefficients X are inversely quantized by the inverse quantization unit 10 and are inverse DCT transformed by the inverse DCT unit 11. As a result, a difference macroblock $D'_n$, which is not

the same as the original difference macroblock $D_n$ due to the influence of signal loss, is generated.

The predicted macroblock P is added to the difference macroblock $D'_n$ by the adder 12, and thus the reconstructed macroblock $uF'_n$ is generated. The reconstructed macroblock $uF'_n$ is a distorted version of the original macroblock $F_n$. To reduce the influence of such distortion, the filter 13 is used and a reconstructed reference frame is created from a macroblock $F'_n$.

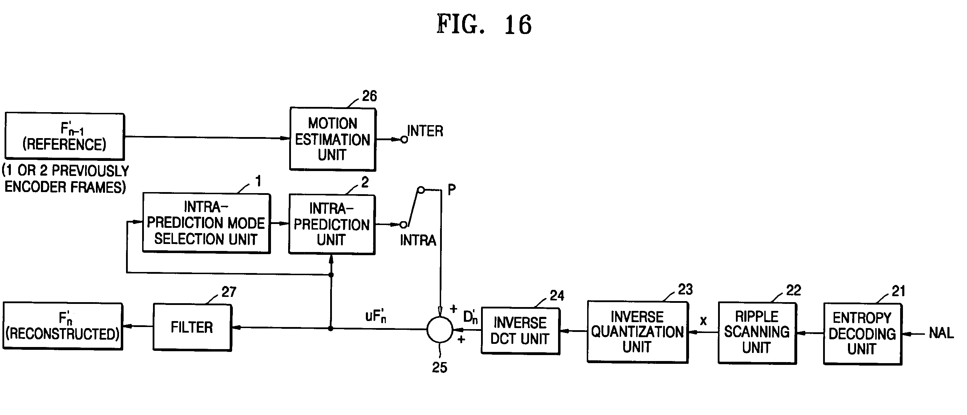

Figure 16 is a schematic block diagram of an intra-prediction decoder according to an embodiment of the present invention.

Referring to Figure 16, the intra-prediction decoder includes an entropy decoding unit 21, a ripple scanning unit 22, an inverse quantization unit 23, an inverse DCT unit 24, an adder 25, a motion estimation unit 26, a filter 27, an intra-prediction mode selection unit 1, and an intra-prediction unit 2.

The intra-prediction decoder receives compressed bitstreams from the NAL. The bitstreams are entropy decoded by the entropy decoding unit 21. At this time, additional information required for decoding a macroblock and, in particular, intra-prediction mode information according to an embodiment of the present invention is extracted. This intra-prediction mode information is transmitted to the intra-prediction mode selection unit 1 and is used for selection of an intra-prediction mode. Data samples that are entropy decoded as described above are re-arranged by the ripple scanning unit 22 to create a set of quantized transform coefficients X. The re-arranged data is inversely quantized by the inverse quantization unit 23 and is inverse DCT transformed by the inverse DCT unit 24, thereby generating a difference macroblock $D'_n$.

The intra-prediction mode selection unit 1 selects an intra-prediction mode using header information extracted by the entropy decoding unit 21, i.e., the intra-prediction mode information according to the present embodiment. The intra-prediction unit 2 performs intra-prediction using the selected intra-prediction mode and creates a predicted macroblock P. The predicted macroblock P is the same as the original predicted macroblock P that is created by the intra-prediction encoder. The predicted macroblock P is added to the difference macroblock $D'_n$ by the adder 25, and thus a reconstructed macroblock $uF'_n$ is generated. The reconstructed macroblock $uF'_n$ is filtered by the filter 27, and thus a decoded macroblock $F'_n$ is created.

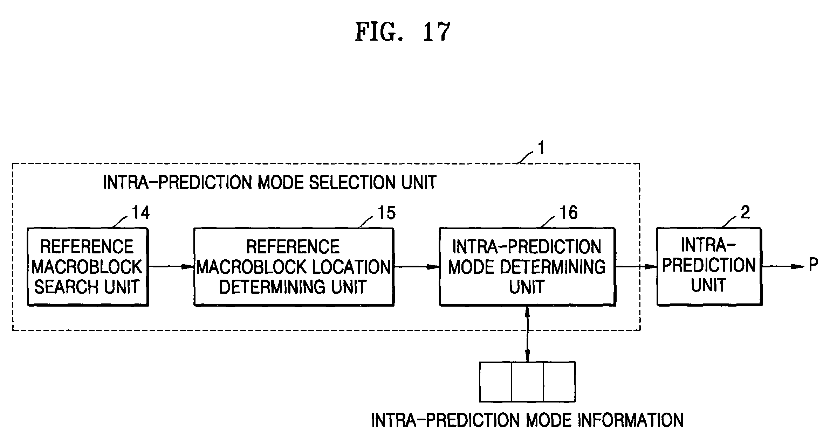

Figure 17 is a detailed block diagram of the intra-prediction mode selection unit 1 shown in Figures 15 and 16.

Referring to Figure 17, the intra-prediction mode selection unit 1 includes a reference macroblock search unit 14, a reference macroblock location determining unit 15, and an intra-prediction mode determining unit 16.

The reference macroblock search unit 14 searches for a reference macroblock that is adjacent to a macroblock to be coded and is within the same present square ring as the macroblock to be coded and a reference macroblock that is adjacent to the macroblock to be coded and is within a previous square ring, with reference to the direction of scanning of ROI-oriented scanning.

The reference macroblock location determining unit 15 determines the location of a reference macroblock to be used for prediction of a macroblock to be coded. If only an origin macroblock exists, it is indicated by A. If two macroblocks exist, one being included in the same square ring as the macroblock E and having just been encoded and one in a previous square ring, the macroblock included in the same square ring is indicated by A and the other is indicated by D. If a macroblock is included in the same square ring as the macroblock and coded immediately before the macroblock E and at least two macroblocks are included in a previous square ring, the macroblock that is included in the same square ring as the macroblock E is indicated by A, a macroblock that is adjacent to the macroblock E and is included in a square ring that has just been coded is indicated by B, and a macroblock that is adjacent to the macroblocks A and B and is included in the square ring that has just been coded is indicated by D.

The intra-prediction mode determining unit 16 determines a mode having the minimum SAD using the determined reference macroblocks A, B, and D as a prediction mode. In other words, when the reference macroblock A exists or the reference macroblocks A and D exist, the intra-prediction mode determining unit 16 determines a mode having the smaller SAD as an intra-prediction mode by using two modes, i.e., mode 0 and mode 1, in which only information about the macroblock A is used. If the reference macroblocks A, B, and D exist, the intra-prediction mode determining unit 16 calculates SADs between the macroblock E and predicted macroblocks according to mode 2, mode 3, mode 4, and mode 5, in which information of the macroblocks A, B, and D is used and determines a mode having the minimum SAD as an intra-prediction mode.

The intra-prediction mode selection units 1 included in the intra-prediction encoder and the intra-prediction decoder are similar to each other, but the intra-prediction mode selection unit 1 of the intra-prediction encoder determines an intra-prediction mode and transmits the intra-prediction mode information to the entropy encoding unit 9 to transmit the intra-prediction mode information to the intra-prediction decoder. On the other hand, the intra-prediction mode selection unit 1 of the intra-prediction decoder receives the intra-prediction mode information from the entropy decoding unit 21 and performs intra-prediction using the received intra-prediction mode information.

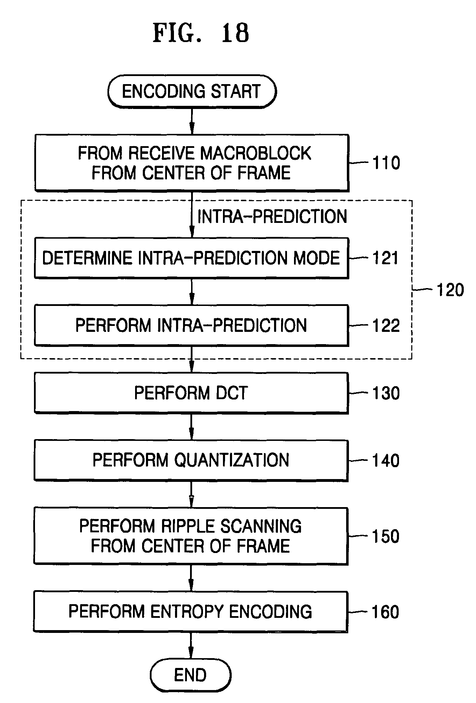

Figure 18 is a flowchart illustrating an intra-prediction encoding method according to an embodiment of the present invention.

Referring to Figure 18, a macroblock to be coded is received from the center of a frame during ROI-oriented scanning, in operation 110.

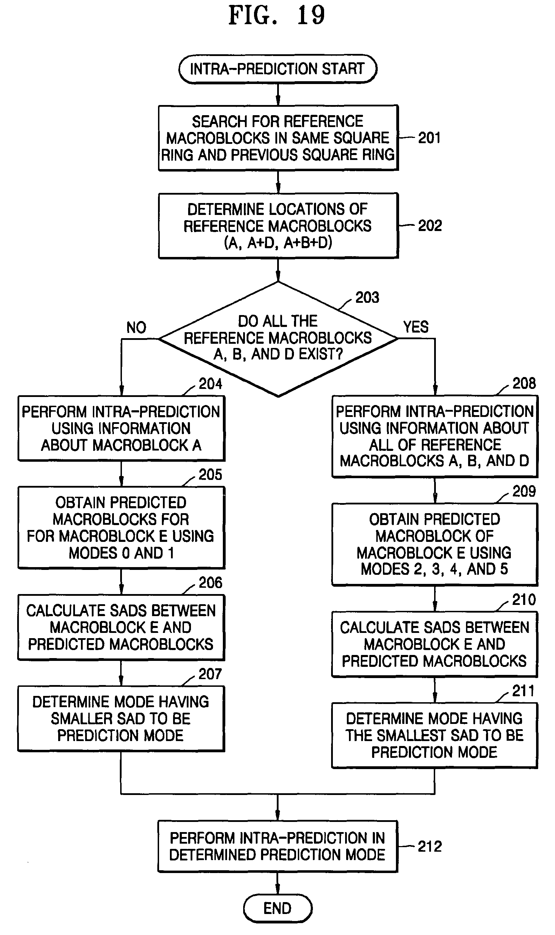

In operation 121, an intra-prediction mode is selected. In operation 122, intra-prediction is performed in the selected intra-prediction mode. Intra-prediction will be described in detail with reference to Figure 19.

In operation 130, the intrapredicted frame is DCT transformed.

In operation 140, the DCT transformed frame is quantized.

In operation 150, the quantized frame is ripple scanned from the center of the frame.

In operation 160, the ripple scanned data is entropy encoded. In the entropy encoding, information about the intra-prediction mode is inserted into the ripple scanned data, entropy encoded, and then transmitted to an intra-prediction decoder.

Figure 19 is a detailed flowchart illustrating intra-prediction shown in Figure 18.

Referring to Figure 19, a reference macroblock that is adjacent to the macroblock to be coded and is included in the same present square ring as the macroblock to be coded is searched for based on the direction of scanning of the ROI-oriented scanning, in operation 201. Also, in operation 201, a reference macroblock that is adjacent to the macroblock to be coded and is included in a previous square ring is searched for based on the direction of scanning of the ROI-oriented scanning.

In operation 202, the location of the reference macroblock is determined.

If there is an original macroblock in the center, the original macroblock is indicated by A.

In other words, if two reference macroblocks exist, one being included in the same square ring and one in the previous square ring, the reference macroblock included in the same square ring is indicated by A and the reference macroblock included in the previous square ring is indicated by D.

If a macroblock is included in the same square ring as the macroblock and coded immediately before the macroblock E and at least two macroblocks are included in a previous square ring, the macroblock that is included in the same square ring as the macroblock E is indicated by A, a macroblock that is adjacent to the macroblock E and is included in a square ring that has just been coded is indicated by B, and a macroblock that is adjacent to the macroblocks A and B and is included in the square ring that has just been coded is indicated by D.

In operation 203, once the locations of the reference macroblocks are determined, it is determined whether all of the reference macroblocks A, B, and D exist. If any of the reference macroblocks A, B, and D do not exist, operation 204 is performed.

If the reference macroblock A only exists or the reference macroblocks A and D only exist, information regarding the reference macroblock A is used for intra-prediction in operation 204.

In other words, in operation 205, predicted macroblocks for the macroblock E are obtained using two modes, i.e., mode 0 and mode 1 that only use the information regarding the macroblock A.

In operation 206, SADs between the macroblock E and the predicted macroblocks are calculated. In other words, a SAD between the macroblock E and a predicted macroblock that is obtained in mode 0 and a SAD between the macroblock E and a predicted macroblock that is obtained in mode 1 are calculated.

In operation 207, a mode having the smaller SAD is determined to be a prediction mode.

In operation 212, intra-prediction is performed in the determined prediction mode. In practice, intra-prediction means generating the predicted macroblock that has already been obtained in operation 205.

If all of the reference macroblocks A, B, and D exist, spatial intra-prediction is performed for the macroblock E using information regarding the reference macroblocks A, B, and D, in operation 208.

In operation 209, predicted macroblocks for the macroblock E are obtained using four modes, i.e., mode 2, mode 3, mode 4, and mode 5, that use information regarding all of the reference macroblocks A, B, and D.

In operation 210, SADs between the macroblock E and the predicted macroblocks are calculated. In other words, a SAD between the macroblock E and a predicted macroblock that is obtained in mode 2, a SAD between the macroblock E and a predicted macroblock that is obtained in mode 3, a SAD between the macroblock E and a predicted macroblock that is obtained in mode 4, and a SAD between the macroblock E and a predicted macroblock that is obtained in mode 5 are calculated.

In operation 211, a mode having the smallest SAD among the four SADs is determined to be a prediction mode.

In operation 212, intra-prediction is performed in the determined prediction mode. In practice, intra-prediction means generating the predicted macroblock that has already been obtained in operation 209.

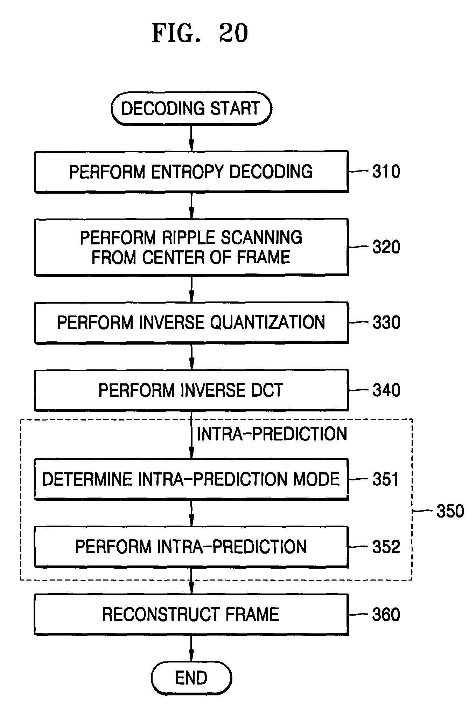

Figure 20 is a flowchart illustrating intra-prediction decoding according to an embodiment of the present invention.

Referring to Figure 20, entropy decoding is performed in operation 310. In the entropy decoding, header information of a frame, and information about an intra-prediction mode are extracted.

In operation 320, ripple scanning is performed from the center of the frame that is created through entropy decoding.

In operation 330, the ripple scanned frame is inversely quantized.

In operation 340, the inversely quantized frame is inverse DCT transformed.

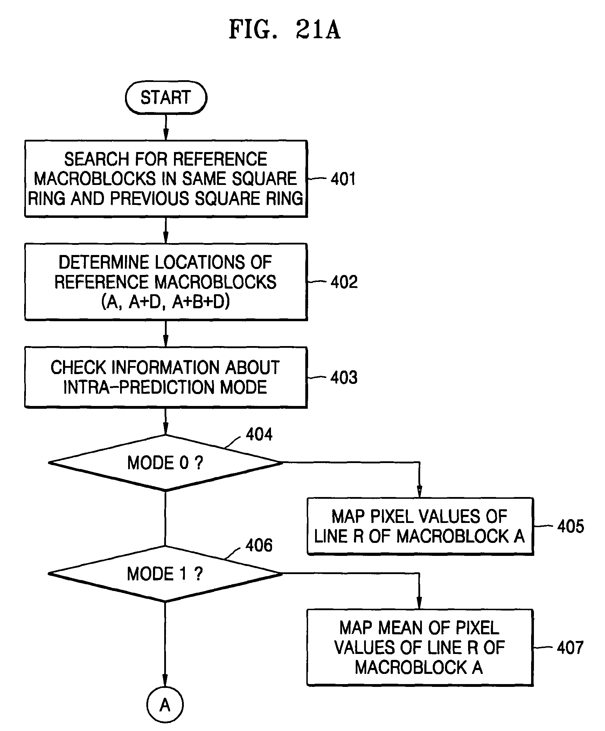

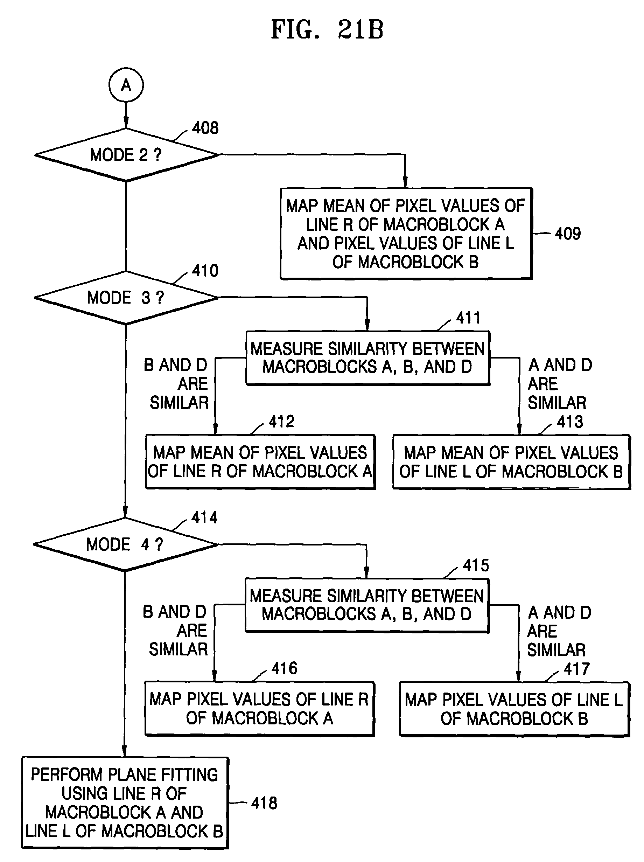

In operation 350, intra-prediction is performed on the inverse DCT transformed frame. In other words, an intra-prediction mode is determined in operation 351 and intra-prediction is performed in operation 352. Intra-prediction will be described in detail with reference to Figures 21A and 21B.

Then, in operation 360, a frame is reconstructed from the intra-predicted frame.

Figures 21A and 21B are detailed flowcharts illustrating intra-prediction shown in Figure 20.

Referring to Figure 21A, in operation 401, a reference macroblock that is adjacent to a macroblock to be coded and is included in the same square ring as the macroblock to be coded is searched with reference to the direction of scanning of the ROI-oriented scanning. Also, in operation 401, a reference macroblock that is adjacent to a macroblock to be coded and is included in a previous square ring is searched for based on the direction of scanning of the ROI-oriented scanning.

In operation 402, the locations of reference macroblocks are determined.

In other words, if only an origin macroblock exists, it is indicated by A. If two macroblocks exist, one being included in the same square ring and in the previous square ring, the macroblock included in the same square ring is indicated by A and the other is indicated by D.

If a macroblock is included in the same square ring as the macroblock and coded immediately before the macroblock E and at least two macroblocks are included in a previous square ring, the macroblock that is included in the same square ring as the macroblock E is indicated by A, a macroblock that is adjacent to the macroblock E and is included in a square ring that has just been coded is indicated by B, and a macroblock that is adjacent to the macroblocks A and B and is included in the square ring that has just been coded is indicated by D.

Once the reference macroblocks are determined, intra-predicton mode information from the encoder is checked in operation 403.

If an intra-prediction mode is determined to be mode 0 in operation 404, pixel values of the line R of the macroblock A are mapped to pixel values of the predicted macroblock in operation 405.

If an intra-prediction mode is determined to be mode 1 in operation 406, a mean of pixel values of the line R of the macroblock A is mapped to pixel values of the predicted macroblock in operation 407.

If an intra-prediction mode is determined to be mode 2 in operation 408, a mean of pixel values of the line R of the macroblock A and the line L of the macroblock B is mapped to pixel values of the predicted macroblock in operation 409.

If an intra-prediction mode is determined to be mode 3 in operation 410, similarity among the macroblocks A, B, and D is measured in operation 411.

If the macroblocks B and D are similar to each other, a mean of pixel values of the line R of the macroblock A is mapped to pixel values of the predicted macroblock in operation 412.

If the macroblocks A and D are similar to each other, a mean of pixel values of the line L of the macroblock B is mapped to pixel values of the predicted macroblock in operation 413.

If an intra-prediction mode is determined to be mode 4 in operation 414, similarity among the macroblocks A, B, and D is measured in operation 415.

If the macroblocks B and D are similar to each other, pixel values of the line R of the macroblock A are extrapolated and then mapped to pixel values of the predicted macroblock in operation 416.

If the macroblocks A and D are similar to each other, pixel values of the line L of the macroblock B are extrapolated and then mapped to pixel values of the predicted macroblock in operation 417.

If an intra-prediction mode is determined to be mode 5, plane fitting is performed using the line R of the macroblock A and the line L of the macroblock B in operation 418.

As described above, according to the present invention, a video encoding/decoding method that is based on ROI-oriented scanning instead of traditional raster scanning can be realized.

The intra-prediction encoding/decoding method can also be embodied as computer readable code on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves. The computer readable recording medium can also be distributed over network coupled computer systems so that the computer readable code is stored and executed in a distributed fashion. Also, functional programs, code, and code segments for implementing the intra-prediction encoding/decoding method can be easily construed by programmers skilled in the art.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A prediction encoder comprising:

   a prediction encoding unit (1, 2) which starts prediction at an origin macroblock of an area of interest of a video frame, predicts in an outward spiral in the shape of square rings composed of macroblocks surrounding the origin macroblock, and encodes video by performing intra-prediction using information about a macroblock that has just been coded in a present square ring which includes a macroblock to be coded and a macroblock that is adjacent to the macroblock to be coded in a previous square ring which is an inner square ring adjacent to the present square ring.

2. The prediction encoder of claim 1, further comprising:

   an intra-prediction mode selection unit (1) selecting a prediction mode that is most suitable for the macroblock to be coded using the information about the macroblock that has just been coded in the present square ring and the macroblock that is adjacent to the macroblock to be coded in the previous square ring; and

   an intra-prediction unit (2) generating a predicted macroblock for the macroblock to be coded using the selected prediction mode.

3. The prediction encoder of claim 2, wherein the intra-prediction mode selection unit (1) comprises:

   a reference macroblock search unit (14) searching for a reference macroblock included in the present square ring and a reference macroblock that is included in the previous square ring and is adjacent to the macroblock to be coded;

   a reference macroblock location determining unit (15) which determines the origin macroblock to be macroblock A if only the origin macroblock exists, determines a macroblock included in the present square ring to be the macroblock A and a macroblock included in the previous square ring to be macroblock D if such macroblocks exist, and determines a macroblock that is included in the present square ring and has just been coded to be the macroblock A, a macroblock that is in the previous square ring and adjacent to the macroblock to be coded to be macroblock B, and a macroblock that is adjacent to the macroblocks A and B and is included in the previous square ring to be the macroblock D, if a macroblock coded just before the macroblock to be coded is included in the present square ring and at least two macroblocks are included in the previous square ring; and

   an intra-prediction mode determining unit (16) which calculates SADs between the predicted macroblocks obtained using the prediction modes and the macroblock to be coded and the macroblock D and determines an intra-prediction mode having the smallest SAD to be an intra-prediction mode.

4. The prediction encoder of claim 3, wherein if the macroblock A exists as a reference macroblock or the macroblocks A and D exist as reference macroblocks, the intra-prediction mode determining unit (16) determines whichever of mode 0 and mode 1 has the smallest SAD to be an intra-prediction mode in mode 0, pixel values of a bottom-most line of the macroblock A that is adjacent to the macroblock to be coded are mapped to pixel values of the macroblock to be coded using only, and, in mode 1, a mean of pixel values of the bottom-most line of the macroblock A that is adjacent to the macroblock to be coded is mapped to the pixel values of the macroblock to be coded.

**5.** The prediction encoder of claim 3, wherein if the macroblocks A, B, and D exist as reference macroblocks, the intra-prediction mode determining unit (16) determines whichever of mode 2, mode 3, mode 4, and mode 5 having the smallest SAD to be an intra-prediction mode,

in mode 2, a mean of pixel values of the bottom-most line of the macroblock A that is adjacent to the macroblock to be coded and the bottom-most line of the macroblock B is mapped to pixel values of the macroblock to be coded,

in mode 3, similarity among the macroblocks A, B, and D is measured and, if the macroblocks A and D are similar to each other, a mean of pixel values of the bottom-most line of the macroblock B that is adjacent to the macroblock to be coded is mapped to the pixel values of the macroblock to be coded or, if the macroblocks B and D are similar to each other, a mean of pixel values of the bottom-most line of the macroblock A that is adjacent to the macroblock to be coded is mapped to the pixel values of the macroblock to be coded,

in mode 4, similarity among the macroblocks A, B, and D is measured and, if the macroblocks A and D are similar to each other, pixel values of the bottom-most line of the macroblock B that is adjacent to the macroblock to be coded are mapped to the pixel values of the macroblock to be coded or, if the macroblocks B and D are similar to each other, pixel values of the bottom-most line of the macroblock A that is adjacent to the macroblock to be coded are mapped to the pixel values of the macroblock to be coded, and

mode 5 is used when video characteristics of the macroblock to be coded gradually change from the macroblock A to the macroblock B.

**6.** The prediction encoder of any of claims 2 to 5, wherein the prediction encoding unit (1, 2) comprises:

a discrete cosine transform (DCT) unit (6) performing DCT on a difference between the intra-predicted macroblock and the macroblock to be coded;

a quantization unit (7) quantizing transformed DCT coefficients;

a ripple scanning unit (8) starting scanning from the origin macroblock of a frame composed of the quantized DCT coefficients and continuing to scan macroblocks in an outward spiral in the shape of square rings; and

an entropy encoding unit (9) entropy encoding ripple scanned data samples and intra-prediction mode information selected by the intra-prediction mode selection unit (1).

**7.** A prediction decoder comprising:

a prediction decoding unit (1, 2) which starts prediction at an origin macroblock of an area of interest of a video frame, predicts in an outward spiral in a shape of square rings composed of macroblocks surrounding the origin macroblock, and decodes video by performing intra-prediction using information about a macroblock that has just been decoded in a present square ring which includes a macroblock to be decoded and a macroblock that is adjacent to the macroblock to be coded in a previous square ring which is an inner square ring adjacent to the present square ring.

**8.** The prediction decoder of claim 7, wherein the prediction decoding unit (1, 2) comprises:

an intra-prediction mode selection unit (1) selecting an intra-prediction mode that is most suitable for the macroblock to be decoded using the information about the macroblock that has just been decoded in the present square ring and the macroblock that is adjacent to the macroblock to be decoded in the previous square ring; and

an intra-prediction unit (2) generating a predicted macroblock for the macroblock to be decoded using the selected prediction mode.

**9.** The prediction decoder of claim 8, wherein the intra-prediction mode selection unit (1) comprises:

a reference macroblock search unit (14) searching for a reference macroblock included in the present square ring and a reference macroblock that is included in the previous square ring and is adjacent to the macroblock to be decoded;

a reference macroblock location determining unit (15) which determines the origin macroblock to be macroblock A if only the origin macroblock exists, determines a macroblock included in the present square ring to be the macroblock A and a macroblock included in the previous square ring to be macroblock D if such macroblocks exist, and determines a macroblock that is included in the present square ring and has just been decoded to be the macroblock A, a macroblock that is in the previous square ring and adjacent to the macroblock to be decoded to be macroblock B, and a macroblock that is adjacent to the macroblocks A and B and is included in the previous square ring to be the macroblock D, if a macroblock coded just before the macroblock to be coded is included in the present square ring and at least two macroblocks are included in the previous square ring; and

an intra-prediction mode determining unit (16) which calculates SADs between the predicted macroblocks obtained using the prediction modes and the macroblock to be decoded and determines an intra-prediction mode having the smallest SAD to be an intra-prediction mode.

**10.** The prediction decoder of claim 9, wherein the intra-prediction unit (2) maps pixel values of a bottom-most line of the macroblock A that is adjacent to the macroblock to be decoded to pixel values of the macroblock to be decoded if received intra-prediction mode information indicates mode 0.

**11.** The prediction decoder of claim 9 or 10, wherein the intra-prediction unit (2) maps a mean of pixel values of the bottom-most line of the macroblock A that is adjacent to the macroblock to be decoded to the pixel values of the macroblock to be decoded if received intra-prediction mode information indicates mode 1.

**12.** The prediction decoder of claim 9, 10 or 11, wherein the intra-prediction unit (2) maps a mean of pixel values of the bottom-most line of the macroblock A that is adjacent to the macroblock to be decoded and the bottom-most line of the macroblock B to pixel values of the macroblock to be decoded if received intra-prediction mode information indicates mode 2.

**13.** The prediction decoder of claim 9, 10, 11 or 12, wherein if received intra-prediction mode information indicates mode 3, the intra-prediction mode determining unit (16) measures similarity among the macroblocks A, B, and D, and determines if the macroblocks A and D are similar to each other, or if the macroblocks B and D are similar to each other,
if the macroblocks A and D are similar to each other, the intra-prediction unit (2) maps a mean of pixel values of the bottom-most line of the macroblock B that is adjacent to the macroblock to be decoded to the pixel values of the macroblock to be decoded, or
if the macroblocks B and D are similar to each other, the intra-prediction unit (2) maps a mean of pixel values of the bottom-most line of the macroblock A that is adjacent to the macroblock to be decoded to the pixel values of the macroblock to be decoded.

**14.** The prediction decoder of any of claims 9 to 13, wherein if received intra-prediction mode information indicates mode 4, the intra-prediction mode determining unit (16) measures similarity among the macroblocks A, B, and D, and determines if the macroblocks A and D are similar to each other, or if the macroblocks B and D are similar to each other,
if the macroblocks A and D are similar to each other, the intra-prediction unit (2) extrapolates pixel values of the bottom-most line of the macroblock B that is adjacent to the macroblock to be decoded and then maps the extrapolated pixel values to the pixel values of the macroblock to be decoded, or
if the macroblocks B and D are similar to each other, the intra-prediction unit (2) extrapolates pixel values of the bottom-most line of the macroblock A that is adjacent to the macroblock to be decoded and maps the extrapolated pixel values to the pixel values of the macroblock to be decoded.

**15.** The prediction decoder of any of claims 9 to 14, wherein the intra-prediction unit (2) performs prediction used when video characteristics of the macroblock to be coded gradually change from the macroblock A to the macroblock B if received intra-prediction mode information indicates mode 5.

**16.** The prediction decoder of any of claims 8 to 15, wherein the prediction decoding unit (1, 2) comprises:

an entropy decoding unit (21) which decodes bitstreams received from a prediction encoder and extracting intra-prediction mode information from the entropy decoded bitstreams;

a ripple scanning unit (22) starting scanning from the origin macroblock of a frame composed of entropy decoded data samples and continuing to scan macroblocks in an outward spiral in the shape of square rings;

an inverse quantization unit (23) inversely quantizing the ripple scanned data samples;

an inverse discrete cosine transform (DCT) unit (24) performing inverse DCT on the inversely quantized data samples; and

an adder (25) adding a macroblock composed of inversely quantized DCT coefficients and the intra-predicted macroblock.

**17.** A prediction encoding method comprising:

starting prediction at an origin macroblock of an area of interest of a video frame, predicting in an outward spiral in a shape of square rings composed of macroblocks surrounding the origin macroblock, and encoding video by performing intra-prediction using information about a macroblock that has just been coded in a present square ring which includes a macroblock to be coded and a macroblock that is adjacent to the macroblock to be coded in a previous square ring which is an inner square ring adjacent to the present square ring.

**18.** The prediction encoding method of claim 17, comprising:

selecting an intra-prediction mode that is most suitable for the macroblock to be coded using the information about the macroblock that has just been coded in the present square ring and the macroblock that is adjacent to the macroblock to be coded in the previous square ring; and

generating a predicted macroblock for the macroblock to be coded using the selected prediction mode.

**19.** The prediction encoding method of claim 18, wherein the selecting of the intra-prediction mode comprises:

searching for a reference macroblock included in the present square ring and a reference macroblock that is included in the previous square ring and is adjacent to the macroblock to be coded;

determining the origin macroblock to be macroblock A if only the origin macroblock exists, determining a macroblock included in the present square ring to be the macroblock A and a macroblock included in the previous square ring to be macroblock D if such macroblocks exist, and determining a macroblock that is included in the present square ring and has just been coded to be the macroblock A, a macroblock that is in the previous square ring and adjacent to the macroblock to be coded to be macroblock B, and a macroblock that is adjacent to the macroblocks A and B and is included in the previous square ring to be the macroblock D, if a macroblock coded just before the macroblock to be coded is included in the present square ring and at least two macroblocks are included in the previous square ring; and

calculating SADs between the predicted macroblocks obtained using the prediction modes and the macroblock to be coded and determining an intra-prediction mode having the smallest SAD to be an intra-prediction mode.

**20.** The prediction encoding method of claim 19, wherein, in the determining of the intra-prediction mode, if the macroblock A exists as a reference macroblock or the macroblocks A and D exist as reference macroblocks, whichever of mode 0 and mode 1 having the smallest SAD is determined to be an intra-prediction mode in mode 0, pixel values of a bottom-most line of the macroblock A that is adjacent to the macroblock to be coded are mapped to pixel values of the macroblock to be coded, and, in mode 1, a mean of pixel values of the bottom-most line of the macroblock A that is adjacent to the macroblock to be coded is mapped to the pixel values of the macroblock to be coded.

**21.** The prediction encoding method of claim 19, wherein, in the determining of the intra-prediction mode, if the macroblocks A, B, and D exist as reference macroblocks, whichever of mode 2, mode 3, mode 4, and mode 5 having the smallest SAD is determined to be an intra-prediction mode,
in mode 2, a mean of pixel values of the bottom-most line of the macroblock A that is adjacent to the macroblock to be coded and the bottom-most line of the macroblock B is mapped to pixel values of the macroblock to be coded,

in mode 3, similarity among the macroblocks A, B, and D is measured and, if the macroblocks A and D are similar to each other, a mean of pixel values of the bottom-most line of the macroblock B that is adjacent to the macroblock to be coded is mapped to the pixel values of the macroblock to be coded or, if the macroblocks B and D are similar to each other, a mean of pixel values of the bottom-most line of the macroblock A that is adjacent to the macroblock to be coded is mapped to the pixel values of the macroblock to be coded,

in mode 4, similarity among the macroblocks A, B, and D is measured and, if the macroblocks A and D are similar to each other, pixel values of the bottom-most line of the macroblock B that is adjacent to the macroblock to be coded are mapped to the pixel values of the macroblock to be coded or, if the macroblocks B and D are similar to each other, pixel values of the bottom-most line of the macroblock A that is adjacent to the macroblock to be coded are mapped to the pixel values of the macroblock to be coded, and

mode 5 is used when video characteristics of the macroblock to be coded gradually change from the macroblock A to the macroblock B.

**22.** The prediction encoding method of claim 18, comprising:

performing DCT on a difference between the intra-predicted macroblock and the macroblock to be coded;

quantizing transformed DCT coefficients;

starting scanning from the origin macroblock of a frame composed of the quantized DCT coefficients and continuing to scan macroblocks in an outward spiral in the shape of square rings; and

entropy encoding ripple scanned data samples and intra-prediction mode information selected by the intra-prediction mode selection unit (1).

**23.** A prediction decoding method comprising:

starting prediction at an origin macroblock of an area of interest of a video frame;

predicting in an outward spiral in a shape of square rings composed of macroblocks surrounding the origin macroblock; and

decoding video by performing intra-prediction using information about a macroblock that has just been decoded in a present square ring which includes a macroblock to be decoded and a macroblock that is adjacent to the macroblock to be decoded in a previous square ring which is an inner square ring adjacent to the present square ring.

**24.** The prediction decoding method of claim 23, further comprising:

selecting an intra-prediction mode that is most suitable for the macroblock to be decoded using the information about the macroblock that has just been decoded in the present square ring and the macroblock that is adjacent to the macroblock to be decoded that is in the previous square ring; and

intra-predicting by obtaining a predicted macroblock of the macroblock to be decoded according to the selected prediction mode.

**25.** The prediction decoding method of claim 24, wherein the selecting of the intra-prediction mode comprises:

searching for a reference macroblock included in the present square ring and a reference macroblock that is included in the previous square ring and is adjacent to the macroblock to be decoded;

determining the origin macroblock to be macroblock A if only the origin macroblock exists, determining a macroblock included in the present square ring to be the macroblock A and a macroblock included in the previous square ring to be macroblock D if such macroblocks exist, and determining a macroblock that is included in the present square ring and has just been decoded to be the macroblock A, a macroblock that is in the previous square ring and adjacent to the macroblock to be decoded to be macroblock B, and a macroblock that is adjacent to the macroblocks A and B and is included in the previous square ring to be the macroblock D, if a macroblock coded just before the macroblock to be coded is included in the present square ring and at least two macroblocks are included in the previous square ring; and

calculating SADs between the predicted macroblocks obtained using the prediction modes and the macroblock to be decoded and determining an intra-prediction mode having the smallest SAD to be an intra-prediction mode.

26. The prediction decoding method of claim 25, wherein the intra-predicting comprises mapping pixel values of a bottom-most line of the macroblock A that is adjacent to the macroblock to be decoded to pixel values of the macroblock to be decoded if received intra-prediction mode information indicates mode 0.

27. The prediction decoding method of claim 25, wherein the intra-predicting comprises mapping a mean of pixel values of the bottom-most line of the macroblock A that is adjacent to the macroblock to be decoded to the pixel values of the macroblock to be decoded if received intra-prediction mode information indicates mode 1.

28. The prediction decoding method of claim 25, wherein the intra-predicting comprises mapping a mean of pixel values of the bottom-most line of the macroblock A that is adjacent to the macroblock to be decoded and the bottom-most line of the macroblock B to pixel values of the macroblock to be decoded if received intra-prediction mode information indicates mode 2.

29. The prediction decoding method of claim 25, wherein, the determining the intra-prediction mode comprises measuring similarity among the macroblocks A, B, and D and determining if the macroblocks A and D are similar to each other, or if the macroblocks B and D are similar to each other, if received intra-prediction mode information indicates mode 3, and the intra-predicting comprises mapping a mean of pixel values of the bottom-most line of the macroblock B that is adjacent to the macroblock to be decoded to the pixel values of the macroblock to be decoded, if the macroblocks A and D are similar to each other, or mapping a mean of pixel values of the bottom-most line of the macroblock A that is adjacent to the macroblock to be decoded is mapped to the pixel values of the macroblock to be decoded, if the macroblocks B and D are similar to each other.

30. The prediction decoding method of claim 25, wherein, the determining the intra-prediction mode comprises measuring similarity among the macroblocks A, B, and D and determining if the macroblocks A and D are similar to each other, or if the macroblocks B and D are similar to each other, if received intra-prediction mode information indicates mode 4, and the intra-predicting comprises, mapping pixel values of the bottom-most line of the macroblock B that is adjacent to the macroblock to be decoded are extrapolated and then mapped to the pixel values of the macroblock to be decoded, if the macroblocks A and D are similar to each other, or
mapping pixel values of the bottom-most line of the macroblock A that is adjacent to the macroblock to be decoded are extrapolated and then mapped to the pixel values of the macroblock to be decoded if the macroblocks B and D are similar to each other.

31. The prediction decoding method of claim 25, wherein, the intra-predicting comprises performing prediction used when video characteristics of the macroblock to be coded gradually change from the macroblock A to the macroblock B, if received intra-prediction mode information indicates mode 5.

32. The prediction decoding method of claim 24, comprising:

entropy decoding bitstreams received from a prediction encoder and extracting intra-prediction mode information from the entropy decoded bitstreams;

starting scanning from the origin macroblock of a frame composed of entropy decoded data samples and continuing to scan macroblocks in an outward spiral in the shape of square rings;

inversely quantizing the ripple scanned data samples;

performing inverse discrete cosine transform (DCT) on the inversely quantized data samples; and

adding a macroblock composed of inversely quantized DCT coefficients and the intra-predicted macroblock.

33. A computer readable recording medium having a program for implementing a prediction encoding method recorded thereon, the prediction encoding method comprising:

starting predicting at an origin macroblock of an area of interest of a video frame, predicting in an outward spiral in a shape of square rings composed of macroblocks surrounding the origin macroblock, and encoding video by performing intra-prediction using information about a macroblock that has just been coded in a present square ring which includes a macroblock to be coded and a macroblock that is adjacent to the macroblock to be coded in a previous square ring which is an inner square ring adjacent to the present square ring.

34. A computer readable recording medium having a program for implementing a prediction decoding method recorded thereon, the prediction decoding method comprising:

starting predicting at an origin macroblock of an area of interest of a video frame, predicting in an outward spiral in a shape of square rings composed of macroblocks surrounding the origin macroblock, and decoding video by performing intra-prediction using information about a macroblock that has just been decoded in a present square ring which includes a macroblock to be decoded and a macroblock that is adjacent to the macroblock to be coded in a previous square ring which is an inner square ring adjacent to the present square ring.

FIG. 1 (PRIOR ART)

## FIG. 2 (PRIOR ART)

P[x][−1], x=0, ..., 15

P[−1][y], y=0, ..., 15

P[x][y]
X=0, ..., 15
Y=0, ..., 15

FIG. 3A (PRIOR ART)

MODE0 : VERTICAL MODE

FIG. 3B (PRIOR ART)

MODE1 : HORIZONTAL MODE

FIG. 3C (PRIOR ART)

MODE2 : DC MODE

FIG. 3D (PRIOR ART)

MODE3 : PLANE MODE

## FIG. 4A

## FIG. 4B

BEGINNING
LEFT=RIGHT=X
TOP=BOTTOM=Y

|  | (0,−1) |  |
|---|---|---|
| (−1,0) | (0,0) | (1,0) |
|  | (0,1) |  |

(0,0)   SLICE GROUP 0   SLICE GROUP 1

CLOCKWISE          (W−1, H−1)

(0,0)   SLICE GROUP 0   SLICE GROUP 1

COUNTER−CLOCKWISE   (W−1, H−1)

# FIG. 5

FIG. 6A

FIG. 6B

FIG. 6C

FIG. 6D

FIG. 7A

FIG. 7B

FIG. 7C

FIG. 7D

FIG. 8A

FIG. 8B

EP 1 601 208 A2

FIG. 9A

FIG. 9B

FIG. 9C

FIG. 9D

FIG. 9E

FIG. 9F

FIG. 9G

FIG. 9H

## FIG. 10

## FIG. 11

FIG. 12A

FIG. 12B

FIG. 13A

FIG. 13B

## FIG. 14

# FIG. 15

EP 1 601 208 A2

INTRA-PREDICTION MODE INFORMATION

# FIG. 16

EP 1 601 208 A2

# FIG. 17

EP 1 601 208 A2

# FIG. 18

```
              ( ENCODING START )
                      │
                      ▼
        ┌─────────────────────────────┐
        │   FROM RECEIVE MACROBLOCK    │──── 110
        │     FROM CENTER OF FRAME     │
        └─────────────────────────────┘
   ┌ ─ ─ ─ ─ ─ ─ ─ ─ ─ ─ ─ ─ ─ ─ ─ ─ ─ ─ ─ ┐
                          INTRA-PREDICTION
   │ ┌─────────────────────────────┐        │
     │ DETERMINE INTRA-PREDICTION MODE │── 121
   │ └─────────────────────────────┘        │──── 120
                      │
   │                  ▼                      │
     ┌─────────────────────────────┐
   │ │   PERFORM INTRA-PREDICTION   │── 122  │
     └─────────────────────────────┘
   └ ─ ─ ─ ─ ─ ─ ─ ─ ─ ─ ─ ─ ─ ─ ─ ─ ─ ─ ─ ┘
                      │
                      ▼
        ┌─────────────────────────────┐
        │         PERFORM DCT          │──── 130
        └─────────────────────────────┘
                      │
                      ▼
        ┌─────────────────────────────┐
        │     PERFORM QUANTIZATION     │──── 140
        └─────────────────────────────┘
                      │
                      ▼
        ┌─────────────────────────────┐
        │    PERFORM RIPPLE SCANNING   │──── 150
        │      FROM CENTER OF FRAME    │
        └─────────────────────────────┘
                      │
                      ▼
        ┌─────────────────────────────┐
        │   PERFORM ENTROPY ENCODING   │──── 160
        └─────────────────────────────┘
                      │
                      ▼
                  (  END  )
```

# FIG. 19

```
                    ( INTRA-PREDICTION START )
                              │
                              ▼
        ┌────────────────────────────────────────┐
        │        SEARCH FOR REFERENCE            │
        │   MACROBLOCKS IN SAME SQUARE           │──── 201
        │  RING AND PREVIOUS SQUARE RING         │
        └────────────────────────────────────────┘
                              │
                              ▼
        ┌────────────────────────────────────────┐
        │      DETERMINE LOCATIONS OF            │
        │      REFERENCE MACROBLOCKS            │──── 202
        │        (A, A+D, A+B+D)                │
        └────────────────────────────────────────┘
                              │
                              ▼
                        ╱─────────╲  203
              NO     ╱  DO ALL THE   ╲    YES
         ◄─────────  REFERENCE MACROBLOCKS  ─────────►
                    ╲  A, B, AND D EXIST?  ╱
                       ╲─────────╱
```

| | |
|---|---|
| 204 | 208 |
| PERFORM INTRA-PREDICTION USING INFORMATION ABOUT MACROBLOCK A | PERFORM INTRA-PREDICTION USING INFORMATION ABOUT ALL OF REFERENCE MACROBLOCKS A, B, AND D |
| 205 | 209 |
| OBTAIN PREDICTED MACROBLOCKS FOR FOR MACROBLOCK E USING MODES 0 AND 1 | OBTAIN PREDICTED MACROBLOCK OF MACROBLOCK E USING MODES 2, 3, 4, AND 5 |
| 206 | 210 |
| CALCULATE SADS BETWEEN MACROBLOCK E AND PREDICTED MACROBLOCKS | CALCULATE SADS BETWEEN MACROBLOCK E AND PREDICTED MACROBLOCKS |
| 207 | 211 |
| DETERMINE MODE HAVING SMALLER SAD TO BE PREDICTION MODE | DETERMINE MODE HAVING THE SMALLEST SAD TO BE PREDICTION MODE |

```
                              ▼
        ┌────────────────────────────────────────┐
        │   PERFORM INTRA-PREDICTION IN          │──── 212
        │   DETERMINED PREDICTION MODE           │
        └────────────────────────────────────────┘
                              │
                              ▼
                          ( END )
```

# FIG. 20

```
            ( DECODING START )
                    │
                    ▼
        ┌───────────────────────────┐
        │  PERFORM ENTROPY DECODING │───── 310
        └───────────────────────────┘
                    │
                    ▼
        ┌───────────────────────────┐
        │   PERFORM RIPPLE SCANNING  │───── 320
        │    FROM CENTER OF FRAME    │
        └───────────────────────────┘
                    │
                    ▼
        ┌───────────────────────────┐
        │ PERFORM INVERSE QUANTIZATION│───── 330
        └───────────────────────────┘
                    │
                    ▼
        ┌───────────────────────────┐
        │     PERFORM INVERSE DCT    │───── 340
        └───────────────────────────┘
```

INTRA-PREDICTION

```
        ┌───────────────────────────┐
        │ DETERMINE INTRA-PREDICTION MODE │─── 351
        └───────────────────────────┘               ─ 350
                    │
                    ▼
        ┌───────────────────────────┐
        │  PERFORM INTRA-PREDICTION  │───── 352
        └───────────────────────────┘

        ┌───────────────────────────┐
        │      RECONSTRUCT FRAME     │───── 360
        └───────────────────────────┘
                    │
                    ▼
                ( END )
```

# FIG. 21A

START

SEARCH FOR REFERENCE
MACROBLOCKS IN SAME SQUARE — 401
RING AND PREVIOUS SQUARE RING

DETERMINE LOCATIONS OF
REFERENCE MACROBLOCKS — 402
(A, A+D, A+B+D)

CHECK INFORMATION ABOUT — 403
INTRA–PREDICTION MODE

404

MODE 0 ?

MAP PIXEL VALUES OF — 405
LINE R OF MACROBLOCK A

406

MODE 1 ?

MAP MEAN OF PIXEL
VALUES OF LINE R OF — 407
MACROBLOCK A

A

# FIG. 21B